# EUROPEAN PATENT APPLICATION

(11) **EP 4 447 583 A1**
(43) Date of publication of application: **16.10.2024**
(21) Application number: 22914477.9
(22) Date of filing: 22.12.2022
(51) Int. Cl.: H04W 72/04, H04B 1/40, H04W 24/10

(54) **DOWNLINK TRANSMISSION METHOD AND APPARATUS**

(30) Priority: 31.12.2021 CN 202111661486
(71) Applicant: Huawei Technologies Co., Ltd., Shenzhen, Guangdong 518129 (CN)
(72) Inventor: PENG, Jindong, Shenzhen, Guangdong 518129 (CN)
(74) Representative: Maiwald GmbH
(86) International application number: PCT/CN2022/140984
(87) International publication number: WO 2023/125223

(57) **Abstract**

Embodiments of this application provide a downlink transmission method and an apparatus. According to the method provided in this application, a control device determines a serving radio frequency device of a terminal device configured to receive target downlink data, and sends indication information to an extension device, where the indication information indicates a radio frequency device configured to communicate the target downlink data, and the radio frequency device configured to communicate the target downlink data is the serving radio frequency device of the terminal device configured to receive the target downlink data. The extension device may send, based on the indication information, the target downlink data to the radio frequency device configured to communicate the target downlink data; or the extension device sends, to the radio frequency device configured to communicate the target downlink data, an instruction that instructs to send the target downlink data, and/or sends, to a radio frequency device not configured to communicate the target downlink data, an instruction that instructs not to send the target downlink data. This helps implement that the radio frequency device not configured to communicate the target downlink data does not send the target downlink data, thereby avoiding invalid sending.

## Description

This application claims priority to Chinese Patent Application No. 202111661486.X, filed with the China National Intellectual Property Administration on December 31, 2021 and entitled "DOWNLINK TRANSMISSION METHOD AND APPARATUS", which is incorporated herein by reference in its entirety.

### TECHNICAL FIELD

Embodiments of this application relate to the communication field, and more specifically, to a downlink transmission method and an apparatus.

### BACKGROUND

With development of communication technologies, an indoor area has become an area with a high incidence of mobile services. In a current indoor signal coverage technology, a base station uses a three-layer structure: baseband unit (baseband unit, BBU)-remote radio unit hub (remote radio unit hub, rHUB)-pico remote radio unit (pico remote radio unit, pRRU). One BBU may be connected to one or more rHUBs, and one rHUB may be connected to a plurality of pRRUs. In a downlink direction, the BBU may perform baseband processing on downlink data to be sent to a terminal, and send processed downlink data to the rHUB. After receiving the downlink data, the rHUB replicates the downlink data into copies, and sends the copies to the pRRUs connected to the rHUB. The pRRUs send the downlink data to the terminal.

However, the foregoing downlink transmission manner may cause invalid sending, and may potentially cause interference to a neighboring cell.

### SUMMARY

Embodiments of this application provide a downlink transmission method and an apparatus, to avoid invalid downlink sending.

According to a first aspect, a downlink transmission method is provided. The method includes: An extension device receives indication information from a control device, where the indication information indicates a radio frequency device configured to communicate target downlink data, and the radio frequency device configured to communicate the target downlink data is a serving radio frequency device of at least one terminal device configured to receive the target downlink data. The extension device receives the target downlink data from the control device. The extension device sends, based on the indication information, the target downlink data to the radio frequency device configured to communicate the target downlink data.

Based on the foregoing technical solution, the control device sends the indication information to the extension device, to indicate the extension device to send the target downlink data to the radio frequency device configured to communicate the target downlink data, so that only the radio frequency device configured to receive the target downlink data can receive the target downlink data. When a radio frequency device not configured to communicate the target downlink data cannot receive the target downlink data, invalid sending can be avoided, and downlink power consumption can be reduced. If the radio frequency device not configured to communicate the target downlink data is neighboring to another cell, interference to the neighboring cell can be further avoided.

With reference to the first aspect, in some implementations of the first aspect, the indication information indicates the radio frequency device configured to communicate the target downlink data in a target time unit.

With reference to the first aspect, in some implementations of the first aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units.

According to a second aspect, a downlink transmission method is provided. The method includes: An extension device receives indication information from a control device, where the indication information indicates a radio frequency device configured to communicate target downlink data, and the radio frequency device configured to communicate the target downlink data is a serving radio frequency device of at least one terminal device configured to receive the target downlink data. The extension device sends a first instruction to the radio frequency device configured to communicate the target downlink data, and/or sends a second instruction to a radio frequency device not configured to communicate the target downlink data, where the first instruction instructs to send the target downlink data, and the second instruction instructs not to send the target downlink data. The extension device receives the target downlink data from the control device. The extension device sends the target downlink data to the radio frequency device configured to communicate the target downlink data and the radio frequency device not configured to communicate the target downlink data.

Based on the foregoing technical solution, the control device sends the indication information to the extension device, so that the extension device can send the first instruction to the radio frequency device configured to communicate the target downlink data, and/or send the second instruction to the radio frequency device not configured to communicate the target downlink data. In this way, only the radio frequency device configured to communicate the target downlink data sends the target downlink data. When the radio frequency device not configured to communicate the target downlink data does not send the target downlink data, invalid sending can be avoided, and downlink power consumption can be reduced. If the radio frequency device not configured to communicate the target downlink data is neighboring to another cell, interference to the neighboring cell can be further avoided.

With reference to the second aspect, in some implementations of the second aspect, the indication information indicates the radio frequency device that communicates the target downlink data in a target time unit.

With reference to the second aspect, in some implementations of the second aspect, the first instruction instructs to send the target downlink data communicated in the target time unit, and the second instruction instructs not to send the target downlink data communicated in the target time unit.

With reference to the second aspect, in some implementations of the second aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units; and the method further includes: The extension device determines, based on the indication information, the radio frequency device configured to communicate the target downlink data and/or the radio frequency device not configured to communicate the target downlink data.

With reference to the second aspect, in some implementations of the second aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units; and that the extension device sends a first instruction to the radio frequency device configured to communicate the target downlink data, and/or sends a second instruction to a radio frequency device not configured to communicate the target downlink data includes: The extension device sends an instruction to a connected radio frequency device, where the instruction instructs whether to send the downlink data communicated in the plurality of time units.

According to a third aspect, a downlink transmission method is provided. The method includes: A radio frequency device receives an instruction from an extension device, where the instruction instructs whether to send target downlink data. The radio frequency device receives the target downlink data from the extension device. The radio frequency device determines, according to the instruction, whether to send the target downlink data.

Based on the foregoing technical solution, the radio frequency device determines, according to the instruction, whether to send the target downlink data. This helps implement that only a serving radio frequency device of a terminal device configured to receive the target downlink data sends the target downlink data. If a radio frequency device not configured to communicate the target downlink data does not send the target downlink data, invalid sending can be avoided, and downlink power consumption can be reduced. If the radio frequency device not configured to communicate the target downlink data is neighboring to another cell, interference to the neighboring cell can be further avoided.

With reference to the third aspect, in some implementations of the third aspect, the instruction instructs to send the target downlink data communicated in a target time unit.

With reference to the third aspect, in some implementations of the third aspect, the instruction instructs whether to send downlink data communicated in a plurality of time units, and the plurality of time units include the target time unit for communicating the target downlink data.

According to a fourth aspect, a downlink transmission method is provided. The method includes: A control device determines a serving radio frequency device of at least one terminal device configured to receive target downlink data. The control device sends indication information to an extension device, where the indication information indicates a radio frequency device configured to communicate the target downlink data, and the radio frequency device configured to communicate the target downlink data is the serving radio frequency device of the at least one terminal device configured to receive the target downlink data.

Based on the foregoing technical solution, a control device determines the serving radio frequency device of the terminal device configured to receive the target downlink data, and sends the indication information to the extension device. The extension device may send, based on the indication information, the target downlink data to the radio frequency device configured to communicate the target downlink data; or the extension device sends, to the radio frequency device configured to communicate the target downlink data, an instruction that instructs to send the target downlink data, and/or sends, to a radio frequency device not configured to communicate the target downlink data, an instruction that instructs not to send the target downlink data. This helps implement that the radio frequency device not configured to communicate the target downlink data does not send the target downlink data, thereby avoiding invalid sending and reducing downlink power consumption.

With reference to the fourth aspect, in some implementations of the fourth aspect, the indication information indicates the radio frequency device configured to communicate the target downlink data in a target time unit.

With reference to the fourth aspect, in some implementations of the fourth aspect, that a control device determines a serving radio frequency device of at least one terminal device configured to receive target downlink data includes: The control device determines a serving radio frequency device of at least one terminal device configured to receive downlink data communicated in a plurality of time units, where the plurality of time units include a target time unit for communicating the target downlink data, where the indication information indicates at least one radio frequency device configured to communicate the downlink data in the plurality of time units, and the at least one radio frequency device is the serving radio frequency device of the at least one terminal device configured to receive the downlink data in the plurality of time units.

With reference to the fourth aspect, in some implementations of the fourth aspect, the method further includes: The control device determines, based on a power of an uplink signal received by each radio frequency device from the terminal device configured to receive the target downlink data, the serving radio frequency device of the terminal device configured to receive the target downlink data.

With reference to the fourth aspect, in some implementations of the fourth aspect, the method further includes: The control device determines, based on a beam identifier reported by the terminal device configured to receive the target downlink data, the serving radio frequency device of the terminal device configured to receive the target downlink data.

According to a fifth aspect, an uplink transmission method is provided. The method includes: An extension device receives indication information from a control device, where the indication information indicates at least one radio frequency device that performs target uplink transmission, and the radio frequency device that performs the target uplink transmission is a serving radio frequency device of at least one terminal device that performs the target uplink transmission. The extension device receives a signal from the at least one radio frequency device that performs the target uplink transmission. The extension device sends an uplink signal to the control device, where the uplink signal is determined based on the signal received from the at least one radio frequency device that performs the target uplink transmission.

Based on the foregoing technical solution, the control device sends the indication information to the extension device, to indicate the extension device to report the signal received from the at least one radio frequency device that performs the target uplink transmission, thereby preventing the extension device from reporting, to the control device, a signal received from a radio frequency device that does not perform the target uplink transmission. The extension device does not report the signal received from the radio frequency device that does not perform the target uplink transmission, so that an uplink noise floor and uplink power consumption can be reduced.

With reference to the fifth aspect, in some implementations of the fifth aspect, that the extension device receives a signal from the at least one radio frequency device that performs the target uplink transmission includes: The extension device receives the signal from the at least one radio frequency device that performs the target uplink transmission and a signal from a radio frequency device that does not perform the target uplink transmission.

With reference to the fifth aspect, in some implementations of the fifth aspect, that the extension device receives a signal from the at least one radio frequency device that performs the target uplink transmission includes: The extension device receives only the signal from the at least one radio frequency device that performs the target uplink transmission. The method further includes: The extension device sends, to the at least one radio frequency device that performs the target uplink transmission, an instruction that instructs to perform the target uplink transmission, and/or sends, to a radio frequency device that does not perform the target uplink transmission, an instruction that instructs not to perform the target uplink transmission.

Based on the foregoing technical solution, the control device sends the indication information to the extension device, so that the extension device can send, to the radio frequency device that performs the target uplink transmission, the instruction that instructs to perform the target uplink transmission, and/or send, to the radio frequency device that does not perform the target uplink transmission, the instruction that instructs not to perform the target uplink transmission. In this way, only the radio frequency device that performs the target uplink transmission sends the signal to the extension device. Therefore, the extension device does not report, to the control device, a signal received from the radio frequency device that does not perform the target uplink transmission. The extension device does not report the signal received from the radio frequency device that does not perform the target uplink transmission, so that the uplink noise floor and the uplink power consumption can be reduced.

With reference to the fifth aspect, in some implementations of the fifth aspect, the indication information indicates at least one radio frequency device that performs uplink transmission in at least one time unit, the at least one time unit includes a target time unit on which the target uplink transmission is performed, and the at least one radio frequency device that performs the uplink transmission in the at least one time unit is a serving radio frequency device of at least one terminal device that performs the uplink transmission in the at least one time unit.

According to a sixth aspect, an uplink transmission method is provided. The method includes: A radio frequency device receives an instruction sent by an extension device, where the instruction instructs whether to perform target uplink transmission. The radio frequency device determines, according to the instruction, whether to perform the target uplink transmission.

Based on the foregoing technical solution, the radio frequency device determines, according to the instruction, whether to perform the target uplink transmission. This helps implement that only a serving radio frequency device of a terminal device that performs the target uplink transmission performs the target uplink transmission. If a serving radio frequency device of a terminal device that does not perform the target uplink transmission does not perform the target uplink transmission, an uplink noise floor and uplink power consumption can be reduced.

With reference to the sixth aspect, in some implementations of the sixth aspect, the instruction instructs whether to perform uplink transmission in at least one time unit, and the at least one time unit includes a target time unit for performing the target uplink transmission.

According to a seventh aspect, an uplink transmission method is provided. The method includes: A control device determines a serving radio frequency device of at least one terminal device that performs target uplink transmission. The control device sends indication information to an extension device, where the indication information indicates at least one radio frequency device that performs the target uplink transmission, and the at least one radio frequency device that performs the target uplink transmission is the serving radio frequency device of the at least one terminal device that performs the target uplink transmission.

Based on the foregoing technical solution, the control device determines the serving radio frequency device of the terminal device that performs the target uplink transmission, and sends the indication information to the extension device. The extension device may report, based on the indication information, a signal received from the radio frequency device that performs the target uplink transmission; or the extension device sends, to the radio frequency device that performs the target uplink transmission, an instruction that instructs to perform the target uplink transmission, and/or sends, to a radio frequency device that does not perform the target uplink transmission, an instruction that instructs not to perform the target uplink transmission. This helps implement that the control device receives only the signal sent by the radio frequency device that performs the target uplink transmission, thereby reducing an uplink noise floor and uplink power consumption.

With reference to the seventh aspect, in some implementations of the seventh aspect, that a control device determines a serving radio frequency device of at least one terminal device that performs target uplink transmission includes: The control device determines a serving radio frequency device of at least one terminal device that performs uplink transmission in at least one time unit, where the at least one time unit includes a target time unit on which the target uplink transmission is performed, the indication information indicates at least one radio frequency device that performs the uplink transmission in the at least one time unit, and the at least one radio frequency device that performs the uplink transmission in the at least one time unit is the serving radio frequency device of the at least one terminal device that performs the uplink transmission in the at least one time unit.

With reference to the seventh aspect, in some implementations of the seventh aspect, the method further includes: The control device determines, based on a power of an uplink signal received by each radio frequency device from the terminal device that performs the target uplink transmission, the serving radio frequency device of the terminal device that performs the target uplink transmission.

With reference to the seventh aspect, in some implementations of the seventh aspect, the method further includes: The control device determines, based on a beam identifier reported by the terminal device that performs the target uplink transmission, the serving radio frequency device of the terminal device that performs the target uplink transmission.

According to an eighth aspect, an apparatus is provided. The apparatus includes a transceiver unit. The transceiver unit is configured to receive indication information from a control device, where the indication information indicates a radio frequency device configured to communicate target downlink data, and the radio frequency device configured to communicate the target downlink data is a serving radio frequency device of at least one terminal device configured to receive the target downlink data. The transceiver unit is further configured to receive the target downlink data from the control device. The transceiver unit is further configured to send, based on the indication information, the target downlink data to the radio frequency device configured to communicate the target downlink data.

With reference to the eighth aspect, in some implementations of the eighth aspect, the indication information indicates the radio frequency device configured to communicate the target downlink data in a target time unit.

With reference to the eighth aspect, in some implementations of the eighth aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units.

According to a ninth aspect, an apparatus is provided. The apparatus includes a transceiver unit. The transceiver unit is configured to receive indication information from a control device, where the indication information indicates a radio frequency device configured to communicate target downlink data, and the radio frequency device configured to communicate the target downlink data is a serving radio frequency device of at least one terminal device configured to receive the target downlink data. The transceiver unit is further configured to send a first instruction to the radio frequency device configured to communicate the target downlink data, and/or send a second instruction to a radio frequency device not configured to communicate the target downlink data, where the first instruction instructs to send the target downlink data, and the second instruction instructs not to send the target downlink data. The transceiver unit is further configured to receive the target downlink data from the control device. The transceiver unit is further configured to send the target downlink data to the radio frequency device configured to communicate the target downlink data and the radio frequency device not configured to communicate the target downlink data.

With reference to the ninth aspect, in some implementations of the ninth aspect, the indication information indicates the radio frequency device that communicates the target downlink data in a target time unit.

With reference to the ninth aspect, in some implementations of the ninth aspect, the first instruction instructs to send the target downlink data communicated in the target time unit, and the second instruction instructs not to send the target downlink data communicated in the target time unit.

With reference to the ninth aspect, in some implementations of the ninth aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units; and the apparatus further includes a processing unit, where the processing unit is configured to determine, based on the indication information, the radio frequency device configured to communicate the target downlink data and/or the radio frequency device not configured to communicate the target downlink data.

With reference to the ninth aspect, in some implementations of the ninth aspect, the indication information indicates at least one radio frequency device configured to communicate downlink data in a plurality of time units, the plurality of time units include the target time unit for communicating the target downlink data, and the at least one radio frequency device is a serving radio frequency device of at least one terminal device configured to receive the downlink data in the plurality of time units; and the transceiver unit is further configured to send an instruction to a connected radio frequency device, where the instruction instructs whether to send the downlink data communicated in the plurality of time units.

According to a tenth aspect, an apparatus is provided. The apparatus includes a transceiver unit and a processing unit. The transceiver unit is configured to receive an instruction from an extension device, where the instruction instructs whether to send target downlink data. The transceiver unit is further configured to receive the target downlink data from the extension device. The processing unit is configured to determine, according to the instruction, whether to send the target downlink data.

With reference to the tenth aspect, in some implementations of the tenth aspect, the instruction instructs to send the target downlink data communicated in a target time unit.

With reference to the tenth aspect, in some implementations of the tenth aspect, the instruction instructs whether to send downlink data communicated in a plurality of time units, and the plurality of time units include the target time unit for communicating the target downlink data.

According to an eleventh aspect, an apparatus is provided. The apparatus includes a transceiver unit and a processing unit. The processing unit is configured to determine a serving radio frequency device of at least one terminal device configured to receive target downlink data. The transceiver unit is configured to send indication information to an extension device, where the indication information indicates a radio frequency device configured to communicate the target downlink data, and the radio frequency device configured to communicate the target downlink data is the serving radio frequency device of the at least one terminal device configured to receive the target downlink data.

With reference to the eleventh aspect, in some implementations of the eleventh aspect, the indication information indicates the radio frequency device configured to communicate the target downlink data in a target time unit.

With reference to the eleventh aspect, in some implementations of the eleventh aspect, the processing unit is further configured to determine a serving radio frequency device of at least one terminal device configured to receive downlink data communicated in a plurality of time units, where the plurality of time units include a target time unit for communicating the target downlink data, where the indication information indicates at least one radio frequency device configured to communicate the downlink data in the plurality of time units, and the at least one radio frequency device is the serving radio frequency device of the at least one terminal device configured to receive the downlink data in the plurality of time units.

With reference to the eleventh aspect, in some implementations of the eleventh aspect, the processing unit is further configured to determine, based on a power of an uplink signal received by each radio frequency device from the terminal device configured to receive the target downlink data, the serving radio frequency device of the terminal device configured to receive the target downlink data.

With reference to the eleventh aspect, in some implementations of the eleventh aspect, the processing unit is further configured to determine, based on a beam identifier reported by the terminal device configured to receive the target downlink data, the serving radio frequency device of the terminal device configured to receive the target downlink data.

According to a twelfth aspect, an apparatus is provided. The apparatus includes a transceiver unit. The transceiver unit is configured to receive indication information from a control device, where the indication information indicates at least one radio frequency device that performs target uplink transmission, and the radio frequency device that performs the target uplink transmission is a serving radio frequency device of at least one terminal device that performs the target uplink transmission. The transceiver unit is further configured to receive a signal from the at least one radio frequency device that performs the target uplink transmission. The transceiver unit is further configured to send an uplink signal to the control device, where the uplink signal is determined based on the signal received from the at least one radio frequency device that performs the target uplink transmission.

With reference to the twelfth aspect, in some implementations of the twelfth aspect, the transceiver unit is further configured to receive the signal from the at least one radio frequency device that performs the target uplink transmission and a signal from a radio frequency device that does not perform the target uplink transmission.

With reference to the twelfth aspect, in some implementations of the twelfth aspect, the transceiver unit is further configured to receive only the signal from the at least one radio frequency device that performs the target uplink transmission. The transceiver unit is further configured to send, to the at least one radio frequency device that performs the target uplink transmission, an instruction that instructs to perform the target uplink transmission, and/or send, to a radio frequency device that does not perform the target uplink transmission, an instruction that instructs not to perform the target uplink transmission.

With reference to the twelfth aspect, in some implementations of the twelfth aspect, the indication information indicates at least one radio frequency device that performs uplink transmission in at least one time unit, the at least one time unit includes a target time unit on which the target uplink transmission is performed, and the at least one radio frequency device that performs the uplink transmission in the at least one time unit is a serving radio frequency device of at least one terminal device that performs the uplink transmission in the at least one time unit.

According to a thirteenth aspect, an apparatus is provided. The apparatus includes a transceiver unit and a processing unit. The transceiver unit is configured to receive an instruction sent by an extension device, where the instruction instructs whether to perform target uplink transmission. The processing unit is configured to determine, according to the instruction, whether to perform the target uplink transmission.

With reference to the thirteenth aspect, in some implementations of the thirteenth aspect, the instruction instructs whether to perform uplink transmission in at least one time unit, and the at least one time unit includes a target time unit for performing the target uplink transmission.

According to a fourteenth aspect, an apparatus is provided. The apparatus includes a transceiver unit and a processing unit. The processing unit is configured to determine a serving radio frequency device of at least one terminal device that performs target uplink transmission. The transceiver unit is configured to send indication information to an extension device, where the indication information indicates at least one radio frequency device that performs the target uplink transmission, and the at least one radio frequency device that performs the target uplink transmission is the serving radio frequency device of the at least one terminal device that performs the target uplink transmission.

With reference to the fourteenth aspect, in some implementations of the fourteenth aspect, the processing unit is further configured to determine a serving radio frequency device of at least one terminal device that performs uplink transmission in at least one time unit, where the at least one time unit includes a target time unit on which the target uplink transmission is performed, the indication information indicates at least one radio frequency device that performs the uplink transmission in the at least one time unit, and the at least one radio frequency device that performs the uplink transmission in the at least one time unit is the serving radio frequency device of the at least one terminal device that performs the uplink transmission in the at least one time unit.

With reference to the fourteenth aspect, in some implementations of the fourteenth aspect, the processing unit is further configured to determine, based on a power of an uplink signal received by each radio frequency device from the terminal device that performs the target uplink transmission, the serving radio frequency device of the terminal device that performs the target uplink transmission.

With reference to the fourteenth aspect, in some implementations of the fourteenth aspect, the processing unit is further configured to determine, based on a beam identifier reported by the terminal device that performs the target uplink transmission, the serving radio frequency device of the terminal device that performs the target uplink transmission.

According to a fifteenth aspect, this application provides an apparatus, including a processor. The processor is coupled to a memory, and may be configured to execute instructions in the memory, to implement the method according to any one of the first aspect or the possible implementations of the first aspect, implement the method according to any one of the second aspect or the possible implementations of the second aspect, or implement the method according to any one of the fifth aspect or the possible implementations of the fifth aspect. The apparatus further includes the memory. The apparatus further includes a communication interface. The processor is coupled to the communication interface.

In an implementation, the apparatus is an extension device. When the apparatus is the extension device, the communication interface may be a transceiver or an input/output interface.

In another implementation, the apparatus is a chip or a chip system configured in an extension device. When the apparatus is the chip or the chip system configured in the extension device, the communication interface may be an input/output interface.

The transceiver may be a transceiver circuit. The input/output interface may be an input/output circuit.

According to a sixteenth aspect, this application provides an apparatus, including a processor. The processor is coupled to a memory, and may be configured to execute instructions in the memory, to implement the method according to any one of the third aspect or the possible implementations of the third aspect, or implement the method according to any one of the sixth aspect or the possible implementations of the sixth aspect. The apparatus further includes the memory. The apparatus further includes a communication interface. The processor is coupled to the communication interface.

In an implementation, the apparatus is a radio frequency device. When the apparatus is the radio frequency device, the communication interface may be a transceiver or an input/output interface.

In another implementation, the apparatus is a chip or a chip system configured in a radio frequency device. When the apparatus is the chip or the chip system configured in the radio frequency device, the communication interface may be an input/output interface.

The transceiver may be a transceiver circuit. The input/output interface may be an input/output circuit.

According to a seventeenth aspect, this application provides an apparatus, including a processor. The processor is coupled to a memory, and may be configured to execute instructions in the memory, to implement the method according to any one of the fourth aspect or the possible implementations of the fourth aspect, or implement the method according to any one of the seventh aspect or the possible implementations of the seventh aspect. The apparatus further includes the memory. The apparatus further includes a communication interface. The processor is coupled to the communication interface.

In an implementation, the apparatus is a control device. When the apparatus is the control device, the communication interface may be a transceiver or an input/output interface.

In another implementation, the apparatus is a chip or a chip system configured in a control device. When the apparatus is the chip or the chip system configured in the control device, the communication interface may be an input/output interface.

The transceiver may be a transceiver circuit. The input/output interface may be an input/output circuit.

According to an eighteenth aspect, this application provides a processor, including an input circuit, an output circuit, and a processing circuit. The processing circuit is configured to receive a signal through the input circuit, and transmit a signal through the output circuit, so that the processor performs the methods in the foregoing aspects.

In a specific implementation process, the processor may be a chip, the input circuit may be an input pin, the output circuit may be an output pin, and the processing circuit may be a transistor, a gate circuit, a trigger, various logic circuits, and the like. The input signal received through the input circuit may be received and input by, for example, but not limited to, a receiver, the signal output through the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a nineteenth aspect, this application provides a processing apparatus, including: a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a twentieth aspect, this application provides a processing apparatus, including a processor and a memory. The processor is configured to: read instructions stored in the memory, receive a signal by using a receiver, and transmit a signal by using a transmitter, so that the processing apparatus performs the methods in the foregoing aspects.

Optionally, there are one or more processors. If there is a memory, there may also be one or more memories.

Optionally, the memory and the processor may be integrated together, or the memory and the processor may be separately disposed.

In a specific implementation process, the memory may be a non-transitory (non-transitory) memory such as a read-only memory (read-only memory, ROM). The memory and the processor may be integrated into a same chip, or may be separately disposed on different chips. A type of the memory and a manner in which the memory and the processor are disposed are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The apparatuses in the nineteenth aspect and the twentieth aspect each may be a chip. The processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. The memory may be integrated into the processor, may be located outside the processor and exist independently.

According to a twenty-first aspect, this application provides a computer program product. The computer program product includes a computer program (which may also be referred to as code or instructions). When the computer program is run, a computer is enabled to perform the methods in the foregoing aspects.

According to a twenty-second aspect, this application provides a computer-readable storage medium. The computer-readable storage medium stores a computer program (which may also be referred to as code or instructions). When the computer program is run on a computer, the computer is enabled to perform the methods in the foregoing aspects.

According to a twenty-third aspect, this application provides a system, including the foregoing control device, the foregoing extension device, and the foregoing radio frequency device.

### BRIEF DESCRIPTION OF DRAWINGS

FIG. 1 is a schematic diagram of a system used in a method according to an embodiment of this application;
FIG. 2 is a schematic diagram of downlink transmission;
FIG. 3 is a schematic flowchart of a downlink transmission method according to an embodiment of this application;
FIG. 4 is a schematic flowchart of a downlink transmission method according to another embodiment of this application;
FIG. 5 is a schematic flowchart of an uplink transmission method according to an embodiment of this application;
FIG. 6 is a schematic flowchart of an uplink transmission method according to another embodiment of this application;
FIG. 7 is a schematic block diagram of an apparatus according to an embodiment of this application;
FIG. 8 is a schematic diagram of a structure of an apparatus according to an embodiment of this application; and
FIG. 9 is a schematic diagram of a chip system according to an embodiment of this application.

### DESCRIPTION OF EMBODIMENTS

The following describes technical solutions in embodiments in this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a fifth generation (5th generation, 5G) system or new radio (new radio, NR), a sixth generation (6th generation, 6G) system or a future communication system. The 5G communication system in this application includes a non-standalone (non-standalone, NSA) 5G mobile communication system or a standalone (standalone, SA) 5G mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (Internet of things, IoT) communication system, a vehicle to everything (vehicle to everything, V2X) communication system, an uncrewed aerial vehicle (uncrewed aerial vehicle, UAV) communication system, or another communication system.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data connectivity, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, for example, glasses, gloves, watches, clothes, and shoes, that are developed by applying wearable technologies to intelligent designs of daily wear. The wearable device is a portable device that is directly worn or integrated into clothes or an accessory of the user. The wearable device not only is a hardware device, but also implements a powerful function through software support, data exchange, and cloud interaction. Generalized wearable intelligent devices include full-featured and large-size devices that can implement complete or partial functions without depending on smartphones, for example, smart watches or smart glasses, and devices that focus only on one type of application function and need to work with other devices such as smartphones, for example, various smart bands or smart jewelry for monitoring physical signs.

In addition, the terminal device may alternatively be a terminal device in the internet of things (internet of things, IoT) system. An IoT is an important component in future development of information technologies. A main technical feature of the IoT is to connect things to a network by using a communication technology, to implement an intelligent network for human-machine interconnection and thing-thing interconnection. An IoT technology can implement massive connections, deep coverage, and power saving for terminals by using, for example, a narrow band (narrow band) NB technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

Unless otherwise specified, "/" in the descriptions of this application represents an "or" relationship between associated objects. For example, A/B may represent A or B. In this application, "and/or" describes only an association relationship between the associated objects and represents that three relationships may exist. For example, A and/or B may represent the following three cases: Only A exists, both A and B exist, and only B exists. A and B may be singular or plural. In addition, in the descriptions of this application, "a plurality of" means two or more than two, unless otherwise specified. "At least one of the following" or a similar expression thereof indicates any combination of the items, and includes a singular item or any combination of plural items. For example, at least one of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is for representing giving an example, an illustration, or a description. Any embodiment or design scheme described as "example" or "for example" in embodiments of this application should not be explained as being more preferred or having more advantages than another embodiment or design scheme. Exactly, use of the word such as "example" or "for example" is intended to present a related concept in a specific manner for ease of understanding.

In addition, the network architecture and the service scenario in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

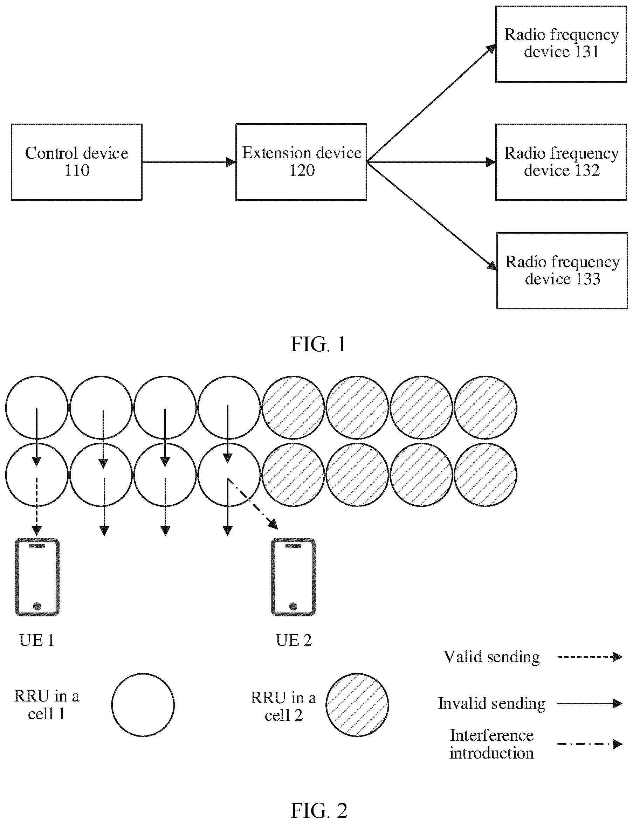

For ease of understanding of embodiments of this application, an application scenario of embodiments of this application is first described in detail with reference to FIG. 1.

FIG. 1 shows an architecture of a system used in a method according to an embodiment of this application. As shown in FIG. 1, the system includes at least one control device, for example, a control device 110 shown in FIG. 1. The system further includes at least one extension device, for example, an extension device 120 shown in FIG. 1. The system further includes at least two radio frequency devices, such as a radio frequency device 131, a radio frequency device 132, and a radio frequency device 133 shown in FIG. 1.

The control device 110 may be used as a main device of a base station, process a digital baseband signal, and provide control and management of a function of each device of the base station.

The extension device 120 is connected to the control device 110 through an optical fiber, and is connected to the radio frequency device 131 to the radio frequency device 133 through network cables. The extension device 120 is configured to provide data aggregation and distribution functions for communication between the control device 110 and the radio frequency device 131 to the radio frequency device 133. For example, in an uplink direction, the extension device 120 receives uplink signals from the radio frequency device 131 to the radio frequency device 133, performs radio frequency combination on the received uplink signals, and then sends, to the control device 110, uplink signals on which the radio frequency combination is performed. For another example, in a downlink direction, the extension device 120 receives a downlink signal sent by the control device 110, and sends the downlink signal to all connected radio frequency devices, namely, the radio frequency device 131 to the radio frequency device 133.

The radio frequency device 131 to the radio frequency device 133 may be used as radio frequency modules of the base station, and may be configured to process an intermediate frequency signal and/or a radio frequency signal, or may be configured to receive and transmit a radio signal. Optionally, the radio frequency device 131 to the radio frequency device 133 may be configured to process a baseband digital signal, for example, perform fast Fourier transform (fast Fourier transform, FFT) on the baseband digital signal.

It should be noted that specific types of the control device, the extension device, and the radio frequency device are not limited in embodiments of this application. For example, the control device 110 may be any one of the following: a baseband processing unit (baseband unit, BBU), a distributed unit (distributed unit, DU), and a central unit (central unit, CU). For example, the extension device may be any one of the following: a switch, a router, and a remote radio unit hub (remote radio unit hub, rHUB). For example, the radio frequency device 131 to the radio frequency device 133 each may be any one of the following: a radio remote unit (radio remote unit, RRU), a radio unit (radio unit, RU), an active antenna unit (active antenna unit, AAU), and a micro radio remote unit (pico radio remote unit, pRRU).

In some deployments, the control device 110 may include the central unit (central unit, CU) and the DU, where the DU is connected to the extension device 120 through the optical fiber. Further, an architecture in which a control plane (control plane, CP) and a user plane (user plane, UP) are separated may be used for the CU. That is, the CU may include a CU-CP entity and a CU-UP entity.

It should be further noted that, in FIG. 1, an example in which the control device 110 is connected to one extension device 120 is merely used, and the control device 110 may be further connected to more extension devices. In addition, in FIG. 1, an example in which the extension device 120 is connected to three radio frequency devices (the radio frequency device 131 to the radio frequency device 133) is merely used, and the extension device 120 may be further connected to more radio frequency devices.

In the system shown in FIG. 1, during downlink transmission, the extension device 120 forwards, to all the connected radio frequency devices (namely, the radio frequency device 131 to the radio frequency device 133), downlink data sent by the control device 110, and then all the radio frequency devices transmit the received downlink data. However, as shown in FIG. 2, downlink data sent by a control device may be sent only to a user in coverage of a radio frequency device (for example, an RRU) in a cell 1. Therefore, invalid sending is caused when another radio frequency device sends the downlink data. In addition, interference may be caused to a neighboring cell 2.

In view of this, embodiments of this application provide a downlink transmission method, to reduce energy consumption of downlink transmission and interference to a neighboring cell.

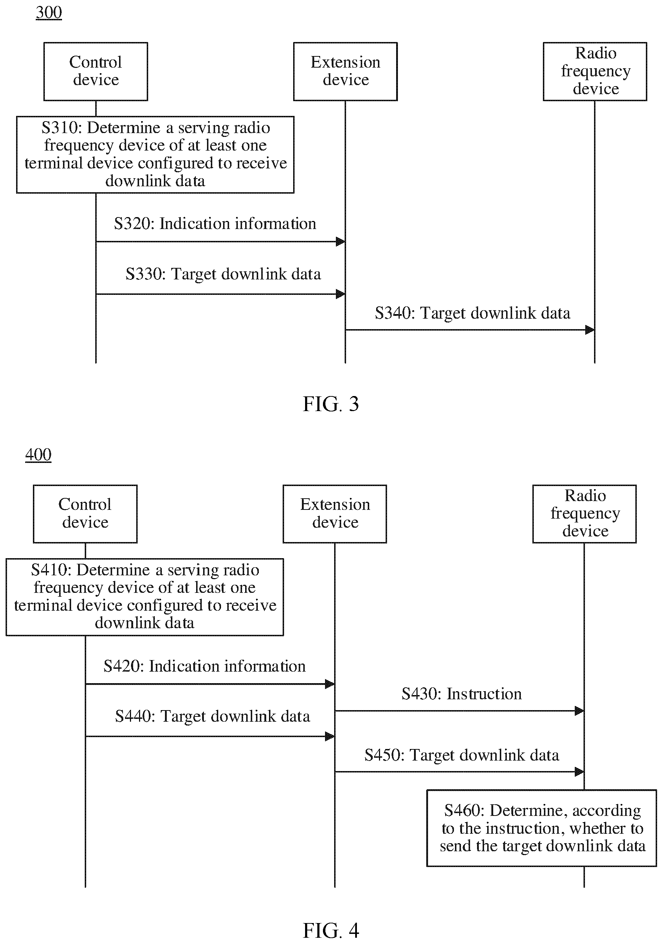

FIG. 3 is a schematic flowchart of a downlink transmission method according to an embodiment of this application. As shown in FIG. 3, the method 300 may include S310 to S340. The following describes the steps in detail.

S310: A control device determines a serving radio frequency device of a terminal device configured to receive downlink data.

For example, the control device may be a BBU, a BU, a CU, or a DU, and a radio frequency device may be an RRU, an RU, a pRRU, or an AAU.

The serving radio frequency device of the terminal device is a radio frequency device that has a communication connection to the terminal device. When the radio frequency device has the communication connection to the terminal device, the radio frequency device may communicate with the terminal device. For example, the radio frequency device may send, to the terminal device, the downlink data received from the control device. For another example, the radio frequency device may receive uplink data from the terminal device.

For example, the control device determines a serving radio frequency device of at least one terminal device configured to receive target downlink data. The target downlink data is downlink data communicated in a target time unit. In other words, the terminal device configured to receive the target downlink data is a terminal device configured to receive the downlink data in the target time unit.

It should be noted that the target time unit is a word introduced for ease of describing the technical solutions in embodiments of this application, and the target time unit may be any time unit, but does not represent a specific time unit. For example, the target time unit is a current time unit.

It should be further noted that a time unit is not limited in embodiments of this application. For example, the time unit may be any one of the following: a second (s), a millisecond (ms), a frame (frame), a subframe (subframe), a slot (slot), a symbol (symbol), and a transmission time interval (transmission time interval, TTI). For example, if the target time unit refers to a current moment, and the time unit is the TTI, the terminal device on which downlink scheduling is performed may be a terminal device on which the downlink scheduling is performed in a current TTI.

For another example, the control device determines a serving radio frequency device of at least one terminal device configured to receive downlink data in a plurality of time units. The plurality of time units include a target time unit for communicating target downlink data. It should be noted that, in different time units in the plurality of time units, terminal devices configured to receive downlink data may be different. For example, a plurality of TTIs include a TTI #1, a TTI #2, and a TTI #3, a terminal device configured to receive downlink data in the TTI #1 includes UE #1, terminal devices configured to receive downlink data in the TTI #2 includes the UE #1 and UE #2, and a terminal device configured to receive downlink data in the TTI #3 includes UE #3.

A manner in which the control device determines the serving radio frequency device of the terminal device is not limited in this embodiment of this application.

In a possible implementation, the control device determines the serving radio frequency device of the terminal device through polling of an uplink signal. The uplink signal may be a demodulation reference signal (demodulation reference signal, DMRS), a sounding reference signal (sounding reference signal, SRS), a signal communicated on a physical random access channel (physical random access channel, PRACH), or a signal communicated on a physical uplink control channel (physical uplink control channel, PUCCH).

The following describes, by using an example in which the uplink signal is the SRS, how the control device determines the serving radio frequency device of the terminal device through the polling of the uplink signal.

Step 1: After the terminal device accesses a network, the control device configures an SRS resource for the terminal device. Accordingly, the terminal device may send the SRS on the allocated SRS resource.

Step 2: The control device sends an instruction, so that the control device receives, at one moment, only an SRS reported by one radio frequency device or a part of radio frequency devices, and the control device receives, at different moments, SRSs reported by different radio frequency devices. For example, the control device sends the instruction, so that the control device receives, at a moment #1, only an SRS reported by a radio frequency device #1, the control device receives, at a moment #2, only a received SRS reported by a radio frequency device #2, and the control device receives, at a moment #3, only a received SRS reported by a radio frequency device #3. The terminal device sends an SRS once at the moment. For example, the moment is one SRS symbol.

For example, the control device sends the instruction to an extension device, so that the extension device forwards, to the control device at the moment, only the SRS reported by the radio frequency device or the part of the radio frequency devices, and the extension device forwards, to the control device at the different moments, the SRSs reported by the different radio frequency devices. Specifically, the control device sends the instruction to the extension device, to indicate the radio frequency devices configured to report the SRSs at the different moments. Accordingly, the extension device forwards, to the control device at the moment according to the instruction received from the control device, only a signal reported by a radio frequency device configured to report the SRS at the moment. For example, the control device sends the instruction to the extension device, to indicate that a radio frequency device configured to report the SRS at the moment #1 is the radio frequency device #1. In this case, the extension device forwards, to the control device at the moment #1, only the SRS reported by the radio frequency device #1.

For example, the control device sends the instruction to each radio frequency device via an extension device, so that only the radio frequency device or the part of the radio frequency devices report the received SRS at the moment, and the different radio frequency devices report the received SRSs at the different moments. For example, the control device sends the instruction to the radio frequency device #1 via the extension device, to instruct the radio frequency device #1 to report the received SRS at the moment #1. In this case, only the radio frequency device #1 reports the received SRS to the control device via the extension device at the moment #1.

Step 3: The control device determines the serving radio frequency device of the terminal device based on a power of an SRS reported by each radio frequency device. For example, the control device determines that the serving radio frequency device of the terminal device is a radio frequency device that reports an SRS having a highest power. For example, if the control device detects powers of the SRSs reported by the radio frequency device #1 to the radio frequency device #3, and determines that the power of the SRS reported by the radio frequency device #1 is highest, the control device determines that the serving radio frequency device of the terminal device is the radio frequency device #1. For another example, the control device determines that the serving radio frequency device of the terminal device is a radio frequency device that reports an SRS having a power that exceeds a power threshold. For example, if the control device detects powers of the SRSs reported by the radio frequency device #1 to the radio frequency device #3, and determines that the power of the signal reported by the radio frequency device #1 exceeds the power threshold and that the power of the SRS reported by the radio frequency device #2 also exceeds the power threshold, the control device determines that serving radio frequency devices of the terminal device are the radio frequency device #1 and the radio frequency device #2.

In a possible implementation, the control device determines the serving radio frequency device of the terminal device through polling of a downlink signal. The downlink signal may be a channel state information reference signal (channel state information reference signal, CSI-RS) or a synchronization signal and physical broadcast channel block (synchronization signal and physical broadcast channel block, SSB).

The following describes, by using an example in which the downlink signal is the CSI-RS, how the control device determines the serving radio frequency device of the terminal device through the polling of the downlink signal.

Step 1: After the terminal device accesses a network, the control device may configure a CSI-RS resource for the terminal device. Accordingly, the terminal device may receive the CSI-RS from the control device on the allocated CSI-RS resource.

Step 2: The control device sends an instruction, so that only one radio frequency device or a part of radio frequency devices send a CSI-RS at one moment, and different radio frequency devices send, at different moments, CSI-RSs received from the control device. For example, the control device sends the instruction, so that only a radio frequency device #1 sends a CSI-RS at a moment #1, only a radio frequency device #2 sends a CSI-RS at a moment #2, and only a radio frequency device #3 sends a CSI-RS at a moment #3. The radio frequency device sends a CSI-RS at least once at the moment. It should be further noted that the CSI-RSs sent by the different radio frequency devices have different beam identifiers.

For example, the control device sends the instruction to an extension device, so that the extension device forwards the CSI-RS only to the radio frequency device or the part of the radio frequency devices at the moment, and the extension device forwards the CSI-RSs to the different radio frequency devices at the different moments. Specifically, the control device sends the instruction to the extension device, to indicate the radio frequency devices configured to send the CSI-RSs at the different moments. Accordingly, the extension device sends, at the moment according to the instruction received from the control device, a CSI-RS only to a radio frequency device configured to send the CSI-RS at the moment. For example, the control device sends the instruction to the extension device, to indicate that a radio frequency device configured to send the CSI-RS at the moment #1 is the radio frequency device #1. In this case, the extension device forwards, to the radio frequency device #1 at the moment #1, only the CSI-RS received from the control device.

For example, the control device sends the instruction to each radio frequency device via an extension device, so that only the radio frequency device or the part of the radio frequency devices send the CSI-RS at the moment. For example, the control device sends the instruction to the radio frequency device #1 via the extension device, to instruct the radio frequency device #1 to send the CSI-RS at the moment #1. In this case, only the radio frequency device #1 sends the CSI-RS at the moment #1.

Step 3: The control device determines the serving radio frequency device of the terminal device based on a beam identifier reported by the terminal device. For example, if the beam identifier reported by the terminal device corresponds to the CSI-RS sent by the radio frequency device #1, the control device determines that the serving radio frequency device of the terminal device is the radio frequency device #1.

Optionally, the control device may configure a measurement report for the terminal device. The measurement report may be for periodically or aperiodically reporting the beam identifier of the CSI-RS.

An occasion on which the control device determines the serving radio frequency device of the at least one terminal device configured to receive the downlink data is not limited in this embodiment of this application.

For example, when the terminal device accesses the network, the control device determines the serving radio frequency device of the terminal device by performing the polling of the uplink signal or the polling of the downlink signal. Further, after determining the at least one terminal device configured to receive the downlink data, the control device may directly determine, without performing the polling of the uplink signal or the polling of the downlink signal, the serving radio frequency device of the at least one terminal device configured to receive the downlink data. For example, there is UE #1, UE #2, and UE #3 in coverage of the control device. After the UE #1 accesses the network, the control device determines, by performing the polling of the uplink signal or the polling of the downlink signal, that a serving radio frequency device of the UE #1 is a pRRU #2. After the UE #2 accesses the network, the control device determines, by performing the polling of the uplink signal or the polling of the downlink signal, that a serving radio frequency device of the UE #2 is a pRRU #4. After the UE #3 accesses the network, the control device determines, by performing the polling of the uplink signal or the polling of the downlink signal, that a serving radio frequency device of the UE #3 is the pRRU #4. Further, if the control device determines that the at least one terminal device configured to receive the downlink data includes the UE #1 and the UE #2, the control device may directly determine the serving radio frequency devices of the UE #1 and the UE #2 without performing the polling of the uplink signal or the polling of the downlink signal.

It should be noted that, in this embodiment of this application, a case in which the serving radio frequency device of the terminal device is determined only when the terminal device accesses the network does not constitute a limitation. If the terminal device is always in the coverage of the control device, the control device may perform the polling of the uplink signal for a plurality of times or perform the polling of the downlink signal for a plurality of times, to dynamically determine the serving radio frequency device of the terminal device. For example, the control device may periodically perform the polling of the uplink signal or periodically perform the polling of the downlink signal, to periodically determine the serving radio frequency device of the terminal device. Alternatively, the control device may aperiodically perform the polling of the uplink signal or aperiodically perform the polling of the downlink signal, to aperiodically determine the serving radio frequency device of the terminal device.

For another example, after determining the at least one terminal device configured to receive the downlink data, the control device determines, by performing the polling of the uplink signal or the polling of the downlink signal, the serving radio frequency device of the at least one terminal device configured to receive the downlink data. For example, there is UE #1, UE #2, and UE #3 in coverage of the control device. If the control device determines that the at least one terminal device configured to receive the downlink data includes the UE #1 and the UE #2, the control device determines serving radio frequency devices of the UE #1 and the UE #2 by performing the polling of the uplink signal or the polling of the downlink signal. Because the UE #3 is not configured to receive the downlink data, the control device may not determine a serving radio frequency device of the UE #3.

S320: The control device sends indication information to the extension device. Accordingly, in S320, the extension device receives the indication information from the control device.

For example, the extension device may be a switch, a router, or an rHUB.

The indication information indicates a radio frequency device configured to communicate the target downlink data. It may be understood that, because the target downlink data sent by the control device needs to be forwarded to the at least one terminal device by the serving radio frequency device of the at least one terminal device configured to receive the target downlink data, the radio frequency device configured to communicate the target downlink data and indicated by the indication information is the serving radio frequency device of the at least one terminal device configured to receive the target downlink data. In other words, the indication information indicates the serving radio frequency device of the at least one terminal device configured to receive the target downlink data.

In a possible implementation, if in S310, the control device determines the serving radio frequency device of the at least one terminal device configured to receive the target downlink data, the control device may determine the indication information based on the serving radio frequency device of the at least one terminal device configured to receive the target downlink data.

In another possible implementation, if in S310, the control device determines the serving radio frequency device of the at least one terminal device configured to receive the downlink data in the plurality of time units, the control device may determine, in the serving radio frequency device of the at least one terminal device configured to receive the downlink data in the plurality of time units, the serving radio frequency device of the at least one device configured to receive the target downlink data, and then the control device determines the indication information based on the serving radio frequency device of the at least one terminal device configured to receive the target downlink data. For example, if in S310, the control device determines serving radio frequency devices of the terminal devices configured to receive the downlink data in the TTI #1 to the TTI #3, the control device first determines a serving radio frequency device of the terminal device configured to receive the downlink data in the current TTI (for example, the TTI #2), and then determines the indication information based on the serving radio frequency device of the terminal device configured to receive the downlink data in the current TTI.

A manner in which the indication information indicates the radio frequency device configured to communicate the target downlink data is not limited in this embodiment of this application.

For example, the indication information includes an identifier of the radio frequency device configured to communicate the target downlink data. Accordingly, the extension device may identify, based on the identifier included in the indication information, the radio frequency device configured to communicate the target downlink data. The identifier of the radio frequency device identifies the radio frequency device. For example, the identifier of the radio frequency device includes one or more of the following: an electronic serial number (electronic serial number, ESN) of the radio frequency device, a cabinet number of a cabinet in which the radio frequency device is located, a subrack number of a subrack in which the radio frequency device is located, and a slot number of a slot in which the radio frequency device is located.

For another example, the indication information includes an identifier of a radio frequency device not configured to communicate the target downlink data. Accordingly, the extension device may exclude, from connected radio frequency devices based on the identifier included in the indication information, the radio frequency device not configured to communicate the target downlink data, and a remaining radio frequency device is the radio frequency devices configured to communicate the target downlink data. For example, the radio frequency devices connected to the extension device include a pRRU #1 to the pRRU #4, and the indication information includes an identifier of the pRRU #3 and an identifier of the pRRU #4. In this case, the extension device may determine, based on the identifiers included in the indication information, that the pRRU #3 and the pRRU #4 are not configured to communicate the target downlink data, thereby determining that the pRRU #1 and the pRRU #2 are configured to communicate the target downlink data.

For still another example, the indication information includes N bits, and a value of N is equal to a quantity of radio frequency devices connected to the extension device. Each of the N bits corresponds to one radio frequency device connected to the extension device. For example, if the extension device is connected to four radio frequency devices, the indication information includes four bits, and the four bits are in a one-to-one correspondence with the four radio frequency devices. Each of the N bits included in the indication information indicates whether the radio frequency device corresponding to the bit is configured to communicate the target downlink data. For example, if a value of an n^{th} bit is "1", the n^{th} bit indicates that a radio frequency device corresponding to the n^{th} bit is configured to communicate the target downlink data; or if a value of an n^{th} bit is "0", the n^{th} bit indicates that a radio frequency device corresponding to the n^{th} bit is not configured to communicate the target downlink data. Alternatively, if a value of an n^{th} bit is "0", the n^{th} bit indicates that a radio frequency device corresponding to the n^{th} bit is configured to communicate the target downlink data; or if a value of an n^{th} bit is "1", the n^{th} bit indicates that a radio frequency device corresponding to the n^{th} bit is not configured to communicate the target downlink data. The n^{th} bit is any one of the N bits.

It should be noted that although the target downlink data is the downlink data communicated in the target time unit, whether the indication information further indicates the target time unit for communicating the target downlink data is not limited in this embodiment of this application.

For example, the indication information does not indicate the target time unit. For example, the extension device may consider by default that the target time unit is a time unit in which the extension device receives the indication information. In other words, the extension device may consider by default that the target downlink data is downlink data communicated in the time unit in which the extension device receives the indication information. For example, if the time unit is the TTI, and the extension device receives the indication information in the TTI #1, the extension device may determine that the target time unit is the TTI #1. In other words, the extension device may determine that the target downlink data is the downlink data communicated in the TTI #1. For another example, the extension device may consider by default that the target time unit is a time unit after a time unit in which the extension device receives the indication information. In other words, the extension device may consider by default that the target downlink data is downlink data communicated in the time unit after the time unit in which the extension device receives the indication information. For example, if the time unit is the slot, and the extension device receives the indication information in a slot #1, the extension device may determine that the target time unit is a slot #2 after the slot #1. In other words, the extension device may determine that the target downlink data is downlink data communicated in the slot #2 after the slot #1.

For another example, the indication information indicates the target time unit. For example, if the time unit is the subframe, the indication information further indicates a subframe number of a target subframe. It may be understood that, when the indication information indicates the target time unit, the indication information indicates the radio frequency device configured to communicate the target downlink data in the target time unit.

Optionally, if in S310, the control device determines the serving radio frequency device of the at least one terminal device configured to receive the downlink data in the plurality of time units, the indication information may indicate at least one radio frequency device configured to communicate the downlink data in the plurality of time units.

It may be understood that, because the downlink data sent by the control device in the plurality of time units needs to be forwarded by a radio frequency device to the terminal device, the at least one radio frequency device indicated by the indication information is the serving radio frequency device of the at least one terminal device configured to receive the downlink data in the plurality of time units. For example, if in S310, the control device determines that the terminal devices configured to receive the downlink data in the TTI #1 to the TTI #3 include the UE #1 to the UE #3, and determines that the serving radio frequency device of the UE #1 is the pRRU #2 and that the serving radio frequency device of the UE #2 and the UE #3 is the pRRU #4, the at least one radio frequency device indicated by the indication information includes the pRRU #2 and/or the pRRU #4.

For example, the at least one radio frequency device indicated by the indication information is configured to communicate downlink data in all of the plurality of time units. In other words, radio frequency devices configured to communicate the downlink data in all of the plurality of time units are the same. For example, the at least one radio frequency device indicated by the indication information is a radio frequency device that serves a largest quantity of terminal devices in the serving radio frequency device of the at least one terminal device configured to receive the downlink data in the plurality of time units. For example, the at least one radio frequency device indicated by the indication information is the pRRU #4. For another example, the at least one radio frequency device indicated by the indication information includes serving radio frequency devices of all terminal devices configured to receive the downlink data in the plurality of time units. For example, the at least one radio frequency device indicated by the indication information includes the pRRU #2 and the pRRU #4.

For another example, the indication information may indicate a radio frequency device configured to communicate downlink data in each of the plurality of time units. A radio frequency device configured to communicate downlink data in a first time unit in the plurality of time units is a serving radio frequency device of a terminal device configured to receive the downlink data in the first time unit, and the first time unit is any one of the plurality of time units. It may be understood that, if the terminal devices that receive the downlink data in the different time units are different, radio frequency devices configured to communicate the downlink data in the different time units and indicated by the indication information may also be different. For example, if the terminal device that receives the downlink data in the TTI #1 is the UE #1, the terminal devices that receive the downlink data in the TTI #2 are the UE #1 and the UE #2, and the terminal device that receives the downlink data in the TTI #3 is the UE #3, the indication information indicates that a radio frequency device configured to communicate the downlink data in the TTI #1 is the pRRU #2, that radio frequency devices configured to communicate the downlink data in the TTI #2 are the pRRU #2 and the pRRU #4, and that a radio frequency device configured to communicate the downlink data in the TTI #3 is the pRRU # 4.

A manner in which the indication information indicates the at least one radio frequency device configured to communicate the downlink data in the plurality of time units is not limited in this embodiment of this application.

For example, the indication information includes a correspondence between a time unit and an identifier of a radio frequency device configured to communicate downlink data. Accordingly, the extension device may determine, based on the correspondence between the time unit and the identifier of the radio frequency device, the radio frequency devices configured to communicate the downlink data in all of the plurality of time units. For example, the indication information is shown in Table 1 or Table 2.

**Table 1**

| Time unit | Identifier of a radio frequency device configured to communicate downlink data |
|---|---|
| TTI #1 to TTI #3 | Identifiers of a pRRU #2 and a pRRU #4 |

**Table 2**

| Time unit | Identifier of a radio frequency device configured to communicate downlink data |
|---|---|
| TTI #1 | Identifier of a pRRU #2 |
| TTI #2 | Identifiers of the pRRU #2 and a pRRU #4 |
| TTI #3 | Identifier of the pRRU #4 |

For another example, the indication information includes a correspondence between a time unit and an identifier of a radio frequency device not configured to communicate downlink data. Accordingly, the extension device may determine, based on the correspondence between the time unit and the identifier of the radio frequency device, a radio frequency device configured to communicate the downlink data in neither of the plurality of time units, thereby determining the radio frequency device configured to communicate the downlink data. For example, the indication information is shown in Table 3 or Table 4. It is assumed that the radio frequency devices connected to the extension device include the pRRU #1 to the pRRU #4.

**Table 3**

| Time unit | Identifier of a radio frequency device not configured to communicate downlink data |
|---|---|
| TTI #1 to TTI #3 | Identifiers of a pRRU #1 and a pRRU #3 |

**Table 4**

| Time unit | Identifier of a radio frequency device not configured to communicate downlink data |
|---|---|
| TTI #1 | Identifiers of a pRRU #1, a pRRU #3, and a pRRU #4 |
| TTI #2 | Identifiers of the pRRU #1 and the pRRU #3 |
| TTI #3 | Identifiers of the pRRU #1, a pRRU #2, and the pRRU #3 |

For another example, the indication information includes a correspondence between a time unit and the N bits. Accordingly, the extension device may determine, based on the correspondence between the time unit and the N bits, the radio frequency devices configured to communicate the downlink data in all of the plurality of time units. For example, the indication information is shown in Table 5 or Table 6. It is assumed that radio frequency devices connected to the extension device include the pRRU #1 to the pRRU #4, "1" indicates being configured to communicate the downlink data, and "0" indicates being not configured to communicate the downlink data.

**Table 5**

| Time unit | N bits |
|---|---|
| TTI #1 to TTI #3 | 0101 |

**Table 6**

| Time unit | N bits |
|---|---|
| TTI #1 | 0100 |
| TTI #2 | 0101 |
| TTI #3 | 0001 |

S330: The control device sends the target downlink data to the extension device. Accordingly, in S330, the extension device receives the target downlink data from the control device.

S340: The extension device sends, based on the indication information, the target downlink data to the radio frequency device configured to communicate the target downlink data.

The target downlink data is the downlink data communicated in the target time unit.

If in S320, the indication information received by the extension device indicates only the radio frequency device configured to communicate the target downlink data, after receiving the target downlink data, the extension device directly sends the target downlink data to the radio frequency device indicated by the indication information. For example, if the indication information received by the extension device indicates only that the radio frequency device configured to communicate the target downlink data includes the pRRU #2, after receiving the target downlink data sent by the control device in the TTI #1, the extension device directly sends, to the pRRU #2, the target downlink data received from the control device.

If in S320, the indication information received by the extension device indicates the at least one radio frequency device configured to communicate the downlink data in the plurality of time units, and the at least one radio frequency device is configured to communicate the downlink data in all of the plurality of time units, after receiving the target downlink data, the extension device directly sends the target downlink data to the radio frequency device indicated by the indication information. For example, the indication information received by the extension device indicates that the radio frequency devices configured to communicate the downlink data in the TTI #1 to the TTI #3 include the pRRU #2 and the pRRU #4. If in S330, the extension device receives the downlink data sent by the control device in the TTI #1, the extension device directly sends, to the pRRU #2 and the pRRU #4, the downlink data received from the control device. Alternatively, if in S330, the extension device receives the downlink data sent by the control device in the TTI #2, the extension device directly sends, to the pRRU #2 and the pRRU #4, the downlink data received from the control device. Alternatively, if in S330, the extension device receives the downlink data sent by the control device in the TTI #3, the extension device directly sends, to the pRRU #2 and the pRRU #4, the downlink data received from the control device.

If in S320, the indication information received by the extension device indicates the radio frequency device configured to communicate the downlink data in each of the plurality of time units, after receiving the target downlink data, the extension device first determines, based on the indication information, the radio frequency device configured to communicate the target downlink data in the target time unit, and then sends the target downlink data to the radio frequency device configured to communicate the target downlink data in the target time unit. For example, the indication information received by the extension device indicates that the radio frequency device configured to communicate the downlink data in the TTI #1 includes the pRRU #2, that the radio frequency devices configured to communicate the downlink data in the TTI #2 include the pRRU #2 and the pRRU #4, and that the radio frequency device configured to communicate the downlink data in the TTI #3 includes the pRRU #4. If in S330, the extension device receives the downlink data sent by the control device in the TTI #1, the extension device first determines, based on the indication information, that the pRRU #2 is configured to communicate the downlink data in the TTI #1, and then the extension device sends, to the pRRU #2, the downlink data received from the control device. Alternatively, if in S330, the extension device receives the downlink data sent by the control device in the TTI #2, the extension device first determines, based on the indication information, that the pRRU #2 and the pRRU #4 are configured to communicate the downlink data in the TTI #2, and then the extension device sends, to the pRRU #2 and the pRRU #4, the downlink data received from the control device. Alternatively, if in S330, the extension device receives the downlink data sent by the control device in the TTI #3, the extension device first determines, based on the indication information, that the pRRU #4 is configured to communicate the downlink data in the TTI #3, and then the extension device sends, to the pRRU #4, the downlink data received from the control device.

Accordingly, after receiving the target downlink data from the extension device, the radio frequency device configured to communicate the target downlink data sends the target downlink data to a terminal device in coverage.

It should be noted that, in S340, the extension device does not send the target downlink data to the radio frequency device not configured to communicate the target downlink data.

In this embodiment of this application, the control device determines, through the polling of the uplink signal or the polling of the downlink signal, the serving radio frequency device of the at least one terminal device configured to receive the target downlink data, and sends the indication information to the extension device, to indicate the extension device to send the target downlink data to the radio frequency device configured to communicate the target downlink data, so that only the radio frequency device configured to receive the target downlink data can receive the target downlink data. It may be understood that, because the radio frequency device not configured to communicate the target downlink data is not the serving radio frequency device of the terminal device configured to receive the target downlink data, the terminal device configured to receive the target downlink data cannot receive the target downlink data from the radio frequency device not configured to communicate the target downlink data. Therefore, when the radio frequency device not configured to communicate the target downlink data cannot receive the target downlink data, invalid sending can be avoided, and downlink power consumption can be reduced. If the radio frequency device not configured to communicate the target downlink data is neighboring to another cell, interference to the neighboring cell can be further avoided.

FIG. 4 is a schematic flowchart of a downlink transmission method according to another embodiment of this application. As shown in FIG. 4, the method 400 may include S410 to S460. The following describes the steps in detail.

S410: A control device determines a serving radio frequency device of at least one terminal device configured to receive downlink data.

Specifically, S410 is the same as S310 in the method 300. For brevity, details are not described again in this embodiment of this application.

S420: The control device sends indication information to an extension device. Accordingly, in S420, the extension device receives the indication information from the control device.

Specifically, S420 is the same as S320 in the method 300. For brevity, details are not described again in this embodiment of this application.

S430: The extension device sends an instruction to a radio frequency device. Accordingly, in S430, the radio frequency device receives the instruction from the control device.

The instruction instructs whether to send target downlink data. For descriptions of the target downlink data, refer to S310.

In a possible implementation, that the extension device sends an instruction to a radio frequency device includes: The extension device sends a first instruction to a radio frequency device configured to communicate the target downlink data, where the first instruction instructs to send the target downlink data.

For example, if in S420, the indication information received by the extension device indicates the radio frequency device configured to communicate the target downlink data, the extension device may send the first instruction to the radio frequency device indicated by the indication information. For example, if the indication information received by the extension device indicates that the radio frequency device configured to communicate the target downlink data includes a pRRU #2, the extension device sends the first instruction to the pRRU #2.

For another example, if in S420, the indication information received by the extension device indicates at least one radio frequency device configured to communicate downlink data in a plurality of time units, and the at least one radio frequency device is configured to communicate the downlink data in all of the plurality of time units, the extension device may send the first instruction to the radio frequency device indicated by the indication information. For example, if the indication information received by the extension device indicates that radio frequency devices configured to communicate downlink data within a TTI #1 to a TTI #3 include a pRRU #2 and a pRRU #4, the extension device sends the first instruction to the pRRU #2 and the pRRU #4. For example, in the TTI #1, the first instruction sent by the extension device to the pRRU #2 and the pRRU #4 instructs to send the downlink data communicated in the TTI #1. For another example, in the TTI #2, the first instruction sent by the extension device to the pRRU #2 and the pRRU #4 instructs to send the downlink data communicated in the TTI #2. For another example, in the TTI #3, the first instruction sent by the extension device to the pRRU #2 and the pRRU #4 instructs to send the downlink data communicated in the TTI #3. For another example, the first instruction sent by the extension device to the pRRU #2 and the pRRU #4 instructs to send the downlink data communicated in the TTI #1 to the TTI #3.

For still another example, if in S420, the indication information received by the extension device indicates a radio frequency device configured to communicate downlink data in each of the plurality of time units, the extension device first determines, based on the indication information, the radio frequency device configured to communicate the target downlink data in a target time unit, and then sends the first instruction to the radio frequency device configured to communicate the target downlink data in the target time unit. For example, the indication information received by the extension device indicates that a radio frequency device configured to communicate downlink data in a TTI #1 includes a pRRU #2, that radio frequency devices configured to communicate downlink data in a TTI #2 include the pRRU #2 and a pRRU #4, and that a radio frequency device configured to communicate downlink data in a TTI #3 includes the pRRU #4. In the TTI #1, the extension device first determines, based on the indication information, that the pRRU #2 is configured to communicate the downlink data in the TTI #1, and then the extension device sends the first instruction to the pRRU #2. Alternatively, in the TTI #2, the extension device first determines, based on the indication information, that the pRRU #2 and the pRRU #4 are configured to communicate the downlink data in the TTI #2, and then the extension device sends the first instruction to the pRRU #2 and the pRRU #4. Alternatively, in the TTI #3, the extension device first determines, based on the indication information, that the pRRU #4 is configured to communicate the downlink data in the TTI #3, and then the extension device sends the first instruction to the pRRU #4.

The first instruction is not limited in this embodiment of this application. For example, the extension device may generate the first instruction based on the indication information. For example, the first instruction may be one-bit information. For another example, the first instruction is the indication information. To be specific, the extension device sends the received indication information to the radio frequency device configured to communicate the target downlink data.

It should be noted that although the first instruction instructs to send the target downlink data, whether the first instruction further indicates the target time unit for communicating the target downlink data is not limited in this embodiment of this application.

For example, the first instruction does not indicate the target time unit. For example, the radio frequency device may consider by default that the target time unit is a time unit in which the extension device receives the first instruction. In other words, the radio frequency device may consider by default that the target downlink data is downlink data communicated in the time unit in which the radio frequency device receives the first instruction. For example, if the time unit is a TTI, and the radio frequency device receives the first instruction in the TTI #1, the radio frequency device may determine that the target time unit is the TTI #1. In other words, the radio frequency device may determine that the target downlink data that the first instruction instructs to send is the downlink data communicated in the TTI #1. Alternatively, the radio frequency device may consider by default that the target time unit is a time unit after a time unit in which the radio frequency device receives the first instruction. For another example, the radio frequency device may consider by default that the target downlink data is downlink data communicated in the time unit after the time unit in which the radio frequency device receives the first instruction. For example, if the time unit is a slot, and the radio frequency device receives the first instruction in a slot #1, the radio frequency device may determine that the target time unit is a slot #2 after the slot #1. In other words, the radio frequency device may determine that the target downlink data that the first instruction instructs to send is downlink data communicated in the slot #2 after the slot #1.

For another example, the first instruction indicates the target time unit. For example, if the time unit is a slot, the first instruction further indicates a slot number of a target slot.

In another possible implementation, that the extension device sends an instruction to a radio frequency device includes: The extension device sends a second instruction to a radio frequency device not configured to communicate the target downlink data, where the second instruction instructs not to send the target downlink data.

For example, if in S420, the indication information received by the extension device indicates a radio frequency device configured to communicate the target downlink data, the extension device may send the second instruction to a radio frequency device that is not indicated by the indication information. For example, if radio frequency devices connected to the extension device include a pRRU #1 to a pRRU #4, and the indication information received by the extension device indicates that the radio frequency device configured to communicate the target downlink data includes the pRRU #2, the extension device sends the second instruction to the pRRU #1, the pRRU #3, and the pRRU #4.

For another example, if in S420, the indication information received by the extension device indicates at least one radio frequency device configured to communicate downlink data in a plurality of time units, and the at least one radio frequency device is configured to communicate the downlink data in all of the plurality of time units, the extension device may send the second instruction to a radio frequency device that is not indicated by the indication information. For example, if radio frequency devices connected to the extension device include a pRRU #1 to a pRRU #4, and the indication information received by the extension device indicates that radio frequency devices configured to communicate downlink data in a TTI #1 to a TTI #3 include the pRRU #2 and the pRRU #4, the extension device sends the second instruction to the pRRU #1 and the pRRU #3. For example, in the TTI #1, the second instruction sent by the extension device to the pRRU #1 and the pRRU #3 instructs not to send the downlink data communicated in the TTI #1. For another example, in the TTI #2, the second instruction sent by the extension device to the pRRU #1 and the pRRU #3 instructs not to send the downlink data communicated in the TTI #2. For another example, in the TTI #3, the second instruction sent by the extension device to the pRRU #1 and the pRRU #3 instructs not to send the downlink data communicated in the TTI #3. For another example, the second instruction sent by the extension device to the pRRU #1 and the pRRU #3 instructs not to send the downlink data communicated in the TTI #1 to the TTI #3.

For still another example, if in S420, the indication information received by the extension device indicates a radio frequency device configured to communicate downlink data in each of the plurality of time units, the extension device first determines, based on the indication information, the radio frequency device not configured to communicate the target downlink data in a target time unit, and then sends the second instruction to the radio frequency device not configured to communicate the target downlink data in the target time unit. For example, the indication information received by the extension device indicates that a radio frequency device configured to communicate downlink data in a TTI #1 includes a pRRU #2, that radio frequency devices configured to communicate downlink data in a TTI #2 include the pRRU #2 and a pRRU #4, and that a radio frequency device configured to communicate downlink data in a TTI #3 includes the pRRU #4. In the TTI #1, the extension device first determines, based on the indication information, that a pRRU #1, a pRRU #3, and the pRRU #4 are not configured to communicate the downlink data in the TTI #1, and then the extension device sends the second instruction to the pRRU #1, the pRRU #3, and the pRRU #4. Alternatively, in the TTI #2, the extension device first determines, based on the indication information, that a pRRU #1 and a pRRU #3 are not configured to communicate the downlink data in the TTI #2, and then the extension device sends the second instruction to the pRRU #1 and the pRRU #3. Alternatively, in the TTI #3, the extension device first determines, based on the indication information, that a pRRU #1 to a pRRU #3 are not configured to communicate the downlink data in the TTI #3, and then the extension device sends the second instruction to the pRRU #1 to the pRRU #3.

The second instruction is not limited in this embodiment of this application. For example, the extension device may generate the second instruction based on the indication information. For example, the second instruction may be one-bit information. For another example, the second instruction is the indication information. To be specific, the extension device sends the received indication information to the radio frequency device not configured to communicate the target downlink data.

It should be noted that although the second instruction instructs not to send the target downlink data, whether the second instruction further indicates the target time unit for communicating the target downlink data is not limited in this embodiment of this application.

For example, the second instruction does not indicate the target time unit. For example, the radio frequency device may consider by default that the target time unit is a time unit in which the extension device receives the second instruction. In other words, the radio frequency device may consider by default that the target downlink data is downlink data communicated in the time unit in which the radio frequency device receives the second instruction. For another example, the radio frequency device may consider by default that the target time unit is a time unit after a time unit in which the radio frequency device receives the second instruction. In other words, the radio frequency device may consider by default that the target downlink data is downlink data communicated in the time unit after the time unit in which the radio frequency device receives the second instruction.

For another example, the second instruction indicates the target time unit. For example, if the time unit is a slot, the second instruction further indicates a slot number of a target slot.

In still another possible implementation, that the extension device sends an instruction to a radio frequency device includes: The extension device sends a first instruction to a radio frequency device configured to communicate the target downlink data, and sends a second instruction to a radio frequency device not configured to communicate the target downlink data.

When the extension device sends both the first instruction and the second instruction, if both the first instruction and the second instruction are the indication information, the extension device may send the indication information in a broadcast manner. It may be understood that, when the extension device sends the indication information in the broadcast manner, all radio frequency devices connected to the extension device may receive the indication information from the extension device. It may be further understood that, when the extension device sends the indication information in the broadcast manner, the extension device may not parse the indication information, but directly send the received indication information to the connected radio frequency devices.

Optionally, if in S420, the indication information received by the extension device indicates a radio frequency device configured to communicate downlink data in each of a plurality of time units, in S430, the instruction sent by the extension device to the radio frequency device may indicate whether the radio frequency device is configured to communicate the downlink data in each of the plurality of time units. For example, if the indication information received by the extension device indicates that a radio frequency device configured to communicate downlink data in a TTI #1 includes a pRRU #2, that radio frequency devices configured to communicate downlink data in a TTI #2 include the pRRU #2 and a pRRU #4, and that a radio frequency device configured to communicate downlink data in a TTI #3 includes the pRRU #4, in S430, an instruction sent by the extension device to a pRRU #1 instructs not to send the downlink data communicated in the TTI #1 to the TTI #3, an instruction sent by the extension device to the pRRU #2 instructs to send the downlink data communicated in the TTI #1 and the TTI #2, and instructs not to send the downlink data communicated in the TTI #3, an instruction sent by the extension device to the pRRU #3 instructs not to send the downlink data communicated in the TTI #1 to the TTI #3, and an instruction sent by the extension device to the pRRU #4 instructs to send the downlink data communicated in the TTI #2 and the TTI #3, and instructs not to send the downlink data communicated in the TTI #1.

An instruction sent by the extension device to each radio frequency device may be an instruction generated by the extension device based on the indication information. Alternatively, an instruction sent by the extension device to each radio frequency device may be the indication information. This is not limited in this embodiment of this application.

S440: The control device sends the target downlink data to the extension device. Accordingly, in S440, the extension device receives the target downlink data from the control device.

S450: The extension device sends the target downlink data to the radio frequency device. Accordingly, in S450, the radio frequency device receives the target downlink data from the extension device.

It should be noted that, in S450, the control device sends the target downlink data to all the connected radio frequency devices. In other words, the control device sends the target downlink data to both the radio frequency device configured to communicate the target downlink data and the radio frequency device not configured to communicate the target downlink data.

Optionally, if the extension device parses the indication information received from the control device, and determines, based on the indication information, the radio frequency device configured to communicate the target downlink data, in S450, the extension device may send the target downlink data only to the radio frequency device configured to communicate the target downlink data.

S460: The radio frequency device determines, according to the instruction, whether to send the target downlink data.

After receiving the target downlink data from the extension device, the radio frequency device determines, according to the instruction, whether to send the target downlink data. If the radio frequency device determines, according to the instruction, to send the target downlink data, the radio frequency device sends the target downlink data. If the radio frequency device determines, according to the instruction, not to send the target downlink data, the radio frequency device does not send the target downlink data.

In a possible implementation, if in S430, the extension device sends the first instruction only to the radio frequency device configured to communicate the target downlink data, in S460, the radio frequency device determines, depending on whether the first instruction is received, whether to send the target downlink data. If the radio frequency device receives the first instruction, the radio frequency device determines to send the target downlink data. If the radio frequency device does not receive the first instruction, the radio frequency device determines not to send the target downlink data.

In another possible implementation, if in S430, the extension device sends the second instruction only to the radio frequency device not configured to communicate the target downlink data, in S460, the radio frequency device determines, depending on whether the second instruction is received, whether to send the target downlink data. If the radio frequency device receives the second instruction, the radio frequency device determines not to send the target downlink data. If the radio frequency device does not receive the second instruction, the radio frequency device determines to send the target downlink data.

In still another possible implementation, if in S430, the extension device sends the first instruction to the radio frequency device configured to communicate the target downlink data, and sends the second instruction to the radio frequency device not configured to communicate the target downlink data, in S460, the radio frequency device determines, according to the received instruction, whether to send the target downlink data. If the radio frequency device receives the first instruction, the radio frequency device determines to send the target downlink data. If the radio frequency device receives the second instruction, the radio frequency device determines not to send the target downlink data.

For example, if the first instruction and/or the second instruction that are/is sent by the extension device are/is the indication information, and the indication information includes an identifier of the radio frequency device configured to communicate the target downlink data, in S460, the radio frequency device determines, depending on whether the indication information includes the identifier of the radio frequency device, whether to send the target downlink data. If the indication information includes the identifier of the radio frequency device, it is equivalent to that the radio frequency device receives the first instruction, and the radio frequency device determines to send the target downlink data. If the indication information does not include the identifier of the radio frequency device, it is equivalent to that the radio frequency device receives the second instruction, and the radio frequency device determines not to send the target downlink data.

For another example, if the first instruction and/or the second instruction that are/is sent by the extension device are/is the indication information, and the indication information includes an identifier of the radio frequency device not configured to communicate the target downlink data, in S460, the radio frequency device determines, depending on whether the indication information includes the identifier of the radio frequency device, whether to send the target downlink data. If the indication information includes the identifier of the radio frequency device, it is equivalent to that the radio frequency device receives the second instruction, and the radio frequency device determines not to send the target downlink data. If the indication information does not include the identifier of the radio frequency device, it is equivalent to that the radio frequency device receives the first instruction, and the radio frequency device determines to send the target downlink data.

For still another example, if the first instruction and/or the second instruction that are/is sent by the extension device are/is the indication information, and the indication information includes N bits, in S460, the radio frequency device determines, based on a bit that is in the N bits and that corresponds to the radio frequency device, whether to send the target downlink data. If the bit that is in the N bits and that corresponds to the radio frequency device indicates to communicate the target downlink data, it is equivalent to that the radio frequency device receives the first instruction, and the radio frequency device determines to send the target downlink data. If the bit that is in the N bits and that corresponds to the radio frequency device indicates not to communicate the target downlink data, it is equivalent to that the radio frequency device receives the second instruction, and the radio frequency device determines not to send the target downlink data.

Optionally, if in S430, the instruction sent by the extension device to the radio frequency device indicates whether the radio frequency device is configured to communicate the downlink data in each of the plurality of time units, in S460, the radio frequency device determines, according to the instruction, whether the radio frequency device is configured to communicate the target downlink data in the target time unit. If the radio frequency device determines that the radio frequency device is configured to communicate the target downlink data in the target time unit, the radio frequency device determines to send the target downlink data. If the radio frequency device determines that the radio frequency device is not configured to communicate the downlink data in the target time unit, the radio frequency device determines not to send the target downlink data.

For example, the radio frequency device is the pRRU #2, and the instruction received by the pRRU #2 instructs to communicate the downlink data in the TTI #1 and the TTI #2, and indicates that the pRRU #2 is not configured to communicate the downlink data in the TTI #3. In the TTI #1, if the pRRU #2 determines, according to the instruction, that the pRRU #2 is configured to communicate the downlink data in the TTI #1, the pRRU #2 determines to send the downlink data communicated in the TTI #1. In the TTI #2, if the pRRU #2 determines, according to the instruction, that the pRRU #2 is configured to communicate the downlink data in the TTI #2, the pRRU #2 determines to send the downlink data communicated in the TTI #2. In the TTI #3, if the pRRU #2 determines, according to the instruction, that the pRRU #2 is not configured to communicate the downlink data in the TTI #3, the pRRU #2 determines not to send the downlink data communicated in the TTI #3.

In this embodiment of this application, the control device determines, through polling of an uplink signal or polling of a downlink signal, a serving radio frequency device of at least one terminal device configured to receive the target downlink data, and sends the indication information to the extension device, so that the extension device can send the first instruction to the radio frequency device configured to communicate the target downlink data, and/or send the second instruction to the radio frequency device not configured to communicate the target downlink data. In this way, only the radio frequency device configured to communicate the target downlink data sends the target downlink data. It may be understood that, because the radio frequency device not configured to communicate the target downlink data is not the serving radio frequency device of the terminal device configured to receive the target downlink data, the terminal device configured to receive the target downlink data cannot receive the target downlink data from the radio frequency device not configured to communicate the target downlink data. Therefore, when the radio frequency device not configured to communicate the target downlink data does not send the target downlink data, invalid sending can be avoided, and downlink power consumption can be reduced. If the radio frequency device not configured to communicate the target downlink data is neighboring to another cell, interference to the neighboring cell can be further avoided.

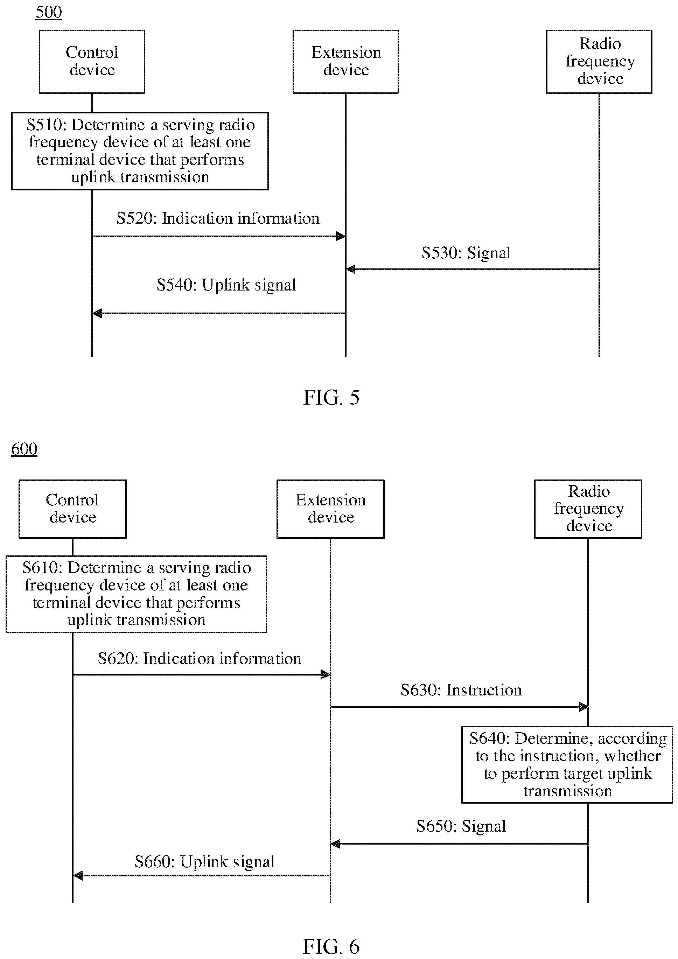

An embodiment of this application further provides an uplink transmission method. The following describes, with reference to FIG. 5 and FIG. 6, the uplink transmission method provided in embodiments of this application.

FIG. 5 is a schematic flowchart of an uplink transmission method according to an embodiment of this application. As shown in FIG. 5, the method 500 may include S510 to S540. The following describes the steps in detail.

S510: A control device determines a serving radio frequency device of at least one terminal device that performs uplink transmission.

For example, the control device may be a BBU, a BU, a CU, or a DU, and a radio frequency device may be an RRU, an RU, a pRRU, or an AAU.

For descriptions of the serving radio frequency device of the terminal device, refer to S310.

For example, the control device determines a serving radio frequency device of at least one terminal device that performs target uplink transmission. The target uplink transmission is uplink transmission performed in a target time unit. In other words, the terminal device that performs the target uplink transmission is a terminal device that performs the uplink transmission in the target time unit. For descriptions of a time unit and the target time unit, refer to S310.

For another example, the control device determines a serving radio frequency device of at least one terminal device that performs uplink transmission in a plurality of time units. The plurality of time units include a target time unit for performing target uplink transmission. It should be noted that, in different time units in the plurality of time units, terminal devices that perform uplink transmission may be different.

For a manner in which the control device determines the serving radio frequency device of the at least one terminal device that performs the uplink transmission, refer to S310.

S520: The control device sends indication information to an extension device. Accordingly, in S520, the extension device receives the indication information from the control device.

For example, the extension device may be a switch, a router, or an rHUB.

The indication information indicates a radio frequency device that performs the target uplink transmission. It may be understood that, because uplink data sent by the at least one terminal device that performs the target uplink transmission needs to be forwarded to the control device via the serving radio frequency device of the at least one terminal device, the radio frequency device that is indicated by the indication information and that performs the target uplink transmission is the serving radio frequency device of the at least one terminal device that performs the target uplink transmission. In other words, the indication information indicates the serving radio frequency device of the at least one terminal device that performs the target uplink transmission.

In a possible implementation, if in S51 0, the control device determines the serving radio frequency device of the at least one terminal device that performs the target uplink transmission, the control device may determine the indication information based on the serving radio frequency device of the at least one terminal device that performs the target uplink transmission.

In another possible implementation, if in S510, the control device determines the serving radio frequency device of the at least one terminal device that performs the uplink transmission in the plurality of time units, the control device may determine, in the serving radio frequency device of the at least one terminal device that performs the uplink transmission in the plurality of time units, the serving radio frequency device of the at least one terminal device that performs the target uplink transmission, and then the control device determines the indication information based on the serving radio frequency device of the at least one terminal device that performs the target uplink transmission.

A manner in which the indication information indicates the radio frequency device that performs the target uplink transmission is the same as the manner in which the indication information indicates the radio frequency device configured to communicate the target downlink data in S310. For brevity, details are not described again in this embodiment of this application.

Similarly, whether the indication information further indicates the target time unit for performing the target uplink transmission is not limited in this embodiment of this application either.

Optionally, if in S51 0, the control device determines the serving radio frequency device of the at least one terminal device configured to perform the uplink transmission in the plurality of time units, the indication information may indicate at least one radio frequency device that performs the uplink transmission in the plurality of time units. It may be understood that, because uplink data sent by the terminal device in the plurality of time units needs to be forwarded by the radio frequency device to the control device, the at least one radio frequency device indicated by the indication information is the serving radio frequency device of the at least one terminal device configured to perform the uplink transmission in the plurality of time units.

For example, the at least one radio frequency device indicated by the indication information is configured to perform uplink transmission in all of the plurality of time units. In other words, radio frequency devices that perform the uplink transmission in all of the plurality of time units are the same.

For another example, the indication information may indicate a radio frequency device that performs uplink transmission in each of the plurality of time units. A radio frequency device that performs uplink transmission in a first time unit in the plurality of time units is a serving radio frequency device of a terminal device configured to perform the uplink transmission in the first time unit, and the first time unit is any one of the plurality of time units.

A manner in which the indication information indicates the at least one radio frequency device that performs the uplink transmission in the plurality of time units is the same as the manner in which the indication information indicates the at least one radio frequency device configured to communicate the downlink data in the plurality of time units in S310. For brevity, details are not described again in this embodiment of this application.

S530: The extension device receives a signal from at least one radio frequency device. Accordingly, in S530, the radio frequency device sends the signal to the extension device.

It should be noted that, in S530, the extension device may receive a signal from at least one radio frequency device connected to the extension device. For example, the extension device may receive a signal sent by the radio frequency device that performs the target uplink transmission, or may receive a signal sent by a radio frequency device that does not perform the target uplink transmission.

It may be understood that, because the radio frequency device that does not perform the target uplink transmission is not the serving radio frequency device of the terminal device that performs the target uplink transmission, the radio frequency device that does not perform the target uplink transmission cannot receive the uplink data sent by the terminal device that performs the target uplink transmission. Therefore, the signal sent by the radio frequency device that does not perform the target uplink transmission to the extension device is a noise floor generated by the radio frequency device.

S540: The extension device sends an uplink signal to the control device. Accordingly, in S540, the control device receives the uplink signal from the extension device.

The uplink signal is determined based on the signal received from the radio frequency device that performs the target uplink transmission. For example, the control device performs radio frequency combination on signals received from radio frequency devices that perform the target uplink transmission, to obtain the uplink signal.

If in S520, the indication information received by the extension device indicates only the radio frequency device that performs the target uplink transmission, or the indication information received by the extension device indicates the at least one radio frequency device that performs the uplink transmission in the plurality of time units, and the at least one radio frequency device performs the uplink transmission in all of the plurality of time units, after receiving the signal from the at least one radio frequency device, the extension device determines, in the at least one radio frequency device, the radio frequency device indicated by the indication information, and then determines the uplink signal based on a signal received from the radio frequency device indicated by the indication information. If in S520, the indication information received by the extension device indicates the radio frequency device that performs the uplink transmission in each of the plurality of time units, after receiving the signal from the at least one radio frequency device, the extension device first determines, based on the indication information, a radio frequency device that performs the target uplink transmission in the target time unit, then determines, in the at least one radio frequency device, the radio frequency device that performs the target uplink transmission, and then determines the uplink signal based on the signal received from the radio frequency device that performs the target uplink transmission.

In this embodiment of this application, the control device determines, through polling of the uplink signal or polling of a downlink signal, the serving radio frequency device of the at least one terminal device that performs the target uplink transmission, and sends the indication information to the extension device, to indicate the extension device to report the signal received from the radio frequency device that performs the target uplink transmission, thereby preventing the extension device from reporting, to the control device, the signal received from the radio frequency device that does not perform the target uplink transmission. It may be understood that, because the radio frequency device that does not perform the target uplink transmission is not the serving radio frequency device of the terminal device that performs the target uplink transmission, the radio frequency device that does not perform the target uplink transmission cannot receive the uplink data from the terminal device that performs the target uplink transmission. Therefore, the signal sent by the radio frequency device that does not perform the target uplink transmission to the extension device is the noise floor generated by the radio frequency device. Therefore, the extension device does not report the signal received from the radio frequency device that does not perform the target uplink transmission, so that an uplink noise floor and uplink power consumption can be reduced.

FIG. 6 is a schematic flowchart of an uplink transmission method according to another embodiment of this application. As shown in FIG. 6, the method 600 may include S610 to S660. The following describes the steps in detail.

S610: A control device determines a serving radio frequency device of at least one terminal device that performs uplink transmission.

Specifically, S610 is the same as S510 in the method 500. For brevity, details are not described again in this embodiment of this application.

S620: The control device sends indication information to an extension device. Accordingly, in S620, the extension device receives the indication information from the control device.

Specifically, S620 is the same as S520 in the method 500. For brevity, details are not described again in this embodiment of this application.

S630: The extension device sends an instruction to a radio frequency device. Accordingly, in S630, the radio frequency device receives the instruction from the extension device.

The instruction instructs whether to perform target uplink transmission.

In a possible implementation, that the extension device sends an instruction to a radio frequency device includes: The extension device sends a first instruction to a radio frequency device that performs target uplink transmission, and/or sends a second instruction to a radio frequency device that does not perform the target uplink transmission. The first instruction instructs to perform the target uplink transmission. The second instruction instructs not to perform the target uplink transmission.

For example, if in S620, the indication information received by the extension device indicates the radio frequency device that performs the target uplink transmission, or the indication information received by the extension device indicates at least one radio frequency device that performs uplink transmission in a plurality of time units, and the at least one radio frequency device performs the uplink transmission in all of the plurality of time units, the extension device may send the first instruction to the radio frequency device indicated by the indication information, and/or sends the second instruction to a radio frequency device that is not indicated by the indication information.

For another example, if in S620, the indication information received by the extension device indicates a radio frequency device that performs uplink transmission in each of a plurality of time units, the extension device first determines, based on the indication information, a radio frequency device that performs the target uplink transmission in a target time unit, and then sends the first instruction to the radio frequency device that performs the target uplink transmission in the target time unit, and/or sends the second instruction to the radio frequency device that does not perform the target uplink transmission in the target time unit.

The first instruction is not limited in this embodiment of this application. For example, the extension device may generate the first instruction based on the indication information. For example, the first instruction may be one-bit information. For another example, the first instruction is the indication information. To be specific, the extension device sends the received indication information to the radio frequency device that performs the target uplink transmission. Similarly, the second instruction may also be generated by the extension device, or may be the indication information.

It should be noted that although the first instruction instructs to perform the target uplink transmission, whether the first instruction further indicates the target time unit for performing the target uplink transmission is not limited in this embodiment of this application.

For example, the first instruction does not indicate the target time unit. For example, the radio frequency device may consider by default that the target time unit is a time unit in which the extension device receives the first instruction. In other words, the radio frequency device may consider by default that the target uplink transmission is uplink transmission performed in the time unit in which the radio frequency device receives the first instruction. For another example, the radio frequency device may consider by default that the target time unit is a time unit after a time unit in which the radio frequency device receives the first instruction. In other words, the radio frequency device may consider by default that the target uplink transmission is uplink transmission performed in the time unit after the time unit in which the radio frequency device receives the first instruction.

For another example, the first instruction indicates the target time unit. For example, if the time unit is a slot, the first instruction further indicates a slot number of a target slot.

Similarly, whether the second instruction indicates the target time unit is not limited in this embodiment of this application either.

Optionally, if in S620, the indication information received by the extension device indicates the radio frequency device that performs the uplink transmission in each of the plurality of time units, in S630, the instruction sent by the extension device to the radio frequency device may instruct whether to perform the uplink transmission in each of the plurality of time units.

S640: The radio frequency device determines, according to the instruction, whether to perform the target uplink transmission.

If the radio frequency device has a signal to be sent to the extension device, the radio frequency device determines, according to the instruction, whether to perform the target uplink transmission. If the radio frequency device determines, according to the instruction, to perform the target uplink transmission, the radio frequency device sends the signal to the extension device. If the radio frequency device determines, according to the instruction, not to perform the target uplink transmission, the radio frequency device does not send the signal to the extension device. It should be noted that the target uplink transmission is uplink transmission performed in the target time unit. Therefore, if the radio frequency device has a signal to be sent to the extension device in the target time unit, the radio frequency device determines, according to the instruction, whether to perform the target uplink transmission.

In a possible implementation, if in S630, the extension device sends the first instruction only to the radio frequency device configured to perform the target uplink transmission, in S640, the radio frequency device determines, depending on whether the first instruction is received, whether to perform the target uplink transmission. If the radio frequency device receives the first instruction, the radio frequency device determines to perform the target uplink transmission. If the radio frequency device does not receive the first instruction, the radio frequency device determines not to perform the target uplink transmission.

In another possible implementation, if in S630, the extension device sends only the second instruction to the radio frequency device that does not perform the target uplink transmission, in S640, the radio frequency device determines, depending on whether the second instruction is received, whether to perform the target uplink transmission. If the radio frequency device receives the second instruction, the radio frequency device determines not to perform the target uplink transmission. If the radio frequency device does not receive the second instruction, the radio frequency device determines to perform the target uplink transmission.

In still another possible implementation, if in S630, the extension device sends the first instruction to the radio frequency device that performs the target uplink transmission, and sends the second instruction to the radio frequency device that does not perform the target uplink transmission, in S640, the radio frequency device determines, according to the received instruction, whether to perform the target uplink transmission. If the radio frequency device receives the first instruction, the radio frequency device determines to perform the target uplink transmission. If the radio frequency device receives the second instruction, the radio frequency device determines not to perform the target uplink transmission.

For example, if the first instruction and/or the second instruction that are/is sent by the extension device are/is the indication information, and the indication information includes an identifier of the radio frequency device that performs the target uplink transmission, in S640, the radio frequency device determines, depending on whether the indication information includes the identifier of the radio frequency device, whether to perform the target uplink transmission. If the indication information includes the identifier of the radio frequency device, it is equivalent to that the radio frequency device receives the first instruction, and the radio frequency device determines to perform the target uplink transmission. If the indication information does not include the identifier of the radio frequency device, it is equivalent to that the radio frequency device receives the second instruction, and the radio frequency device determines not to perform the target uplink transmission.

For another example, if the first instruction and/or the second instruction that are/is sent by the extension device are/is the indication information, and the indication information includes an identifier of the radio frequency device that does not perform the target uplink transmission, in S640, the radio frequency device determines, depending on whether the indication information includes the identifier of the radio frequency device, whether to perform the target uplink transmission. If the indication information includes the identifier of the radio frequency device, it is equivalent to that the radio frequency device receives the second instruction, and the radio frequency device determines not to perform the target uplink transmission. If the indication information does not include the identifier of the radio frequency device, it is equivalent to that the radio frequency device receives the first instruction, and the radio frequency device determines to perform the target uplink transmission.

For still another example, if the first instruction and/or the second instruction that are/is sent by the extension device are/is the indication information, and the indication information includes N bits, in S640, the radio frequency device determines, based on a bit that is in the N bits and that corresponds to the radio frequency device, whether to perform the target uplink transmission. If the bit that is in the N bits and that corresponds to the radio frequency device indicates to perform the target uplink transmission, it is equivalent to that the radio frequency device receives the first instruction, and the radio frequency device determines to perform the target uplink transmission. If the bit that is in the N bits and that corresponds to the radio frequency device indicates not to perform the target uplink transmission, it is equivalent to that the radio frequency device receives the second instruction, and the radio frequency device determines not to perform the target uplink transmission.

Optionally, if in S630, the instruction sent by the extension device to the radio frequency device instructs whether to perform the uplink transmission in each of the plurality of time units, in S640, the radio frequency device determines, according to the instruction, whether to perform the target uplink transmission in the target time unit. If the radio frequency device determines to perform the target uplink transmission in the target time unit, the radio frequency device determines to perform the target uplink transmission. If the radio frequency device determines not to perform the target uplink transmission in the target time unit, the radio frequency device determines not to perform the target uplink transmission.

S650: The extension device receives a signal from at least one radio frequency device. Accordingly, in S650, the radio frequency device sends the signal to the extension device.

It should be noted that, because the extension device sends the second instruction to the radio frequency device that does not perform the target uplink transmission, or does not send the first instruction to the radio frequency device that does not perform the target uplink transmission, in S650, the radio frequency device that does not perform the target uplink transmission does not send a signal to the extension device. In other words, the extension device receives a signal only from the radio frequency device that performs the target uplink transmission.

S660: The extension device sends an uplink signal to the control device. Accordingly, in S540, the control device receives the uplink signal from the extension device.

The uplink signal is determined based on the signal received from the radio frequency device that performs the target uplink transmission. For example, the control device performs radio frequency combination on signals received from radio frequency devices that perform the target uplink transmission, to obtain the uplink signal.

It may be understood that, because the extension device receives the signal only from the radio frequency device that performs the target uplink transmission, in S660, the extension device directly determines the uplink signal based on the signal received from the at least one radio frequency device.

In this embodiment of this application, the control device determines, through polling of the uplink signal or polling of a downlink signal, a serving radio frequency device of at least one terminal device that performs the target uplink transmission, and sends the indication information to the extension device, so that based on the indication information, the extension device can send the first instruction to the radio frequency device that performs the target uplink transmission, and/or send the second instruction to the radio frequency device that does not perform the target uplink transmission. In this way, only the radio frequency device that performs target uplink transmission sends the signal to the extension device, so that the extension device does not report, to the control device, the signal received by the radio frequency device that does not perform the target uplink transmission. It may be understood that, because the radio frequency device that does not perform the target uplink transmission is not the serving radio frequency device of the terminal device that performs the target uplink transmission, the radio frequency device that does not perform the target uplink transmission cannot receive the uplink data from the terminal device that performs the target uplink transmission. Therefore, the signal sent by the radio frequency device that does not perform the target uplink transmission to the extension device is a noise floor generated by the radio frequency device. Therefore, the extension device does not report the signal received from the radio frequency device that does not perform the target uplink transmission, so that an uplink noise floor and uplink power consumption can be reduced.

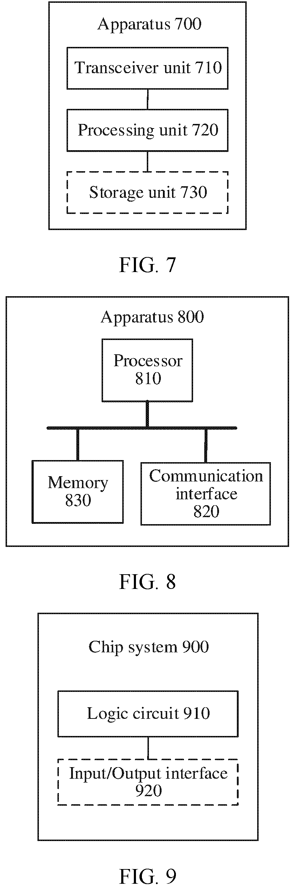

With reference to FIG. 3 to FIG. 6, the foregoing describes in detail the methods provided in embodiments of this application. With reference to FIG. 7 to FIG. 9, the following describes in detail apparatuses provided in embodiments of this application. It should be understood that descriptions of the apparatus embodiments correspond to the descriptions of the method embodiments. Therefore, for content that is not described in detail, refer to the foregoing method embodiments. For brevity, details are not described herein again.

FIG. 7 is a schematic block diagram of an apparatus 700 according to an embodiment of this application. As shown in the figure, the apparatus 700 may include a transceiver unit 710 and a processing unit 720.

In a possible design, the apparatus 700 may be the extension device in the foregoing method embodiments, or may be a chip configured to implement a function of the extension device in the foregoing method embodiments.

It should be understood that the apparatus 700 may correspond to the extension device in the method 300, the method 400, the method 500, or the method 600 according to embodiments of this application. The apparatus 700 may include a unit configured to perform the method performed by the extension device in the method 300 in FIG. 3, the method 400 in FIG. 4, the method 500 in FIG. 5, or the method 600 in FIG. 6. In addition, the units in the apparatus 700 and the foregoing other operations and/or functions are separately for implementing the corresponding procedure in the method 300 in FIG. 3, the method 400 in FIG. 4, the method 500 in FIG. 5, or the method 600 in FIG. 6. It should be understood that a specific process in which the units perform the foregoing corresponding steps has been described in detail in the foregoing method embodiments. For brevity, details are not described herein again.

In a possible design, the apparatus 700 may be the radio frequency device in the foregoing method embodiments, or may be a chip configured to implement a function of the radio frequency device in the foregoing method embodiments.

It should be understood that the apparatus 700 may correspond to the radio frequency device in the method 300, the method 400, the method 500, or the method 600 according to embodiments of this application. The apparatus 700 may include a unit configured to perform the method performed by the radio frequency device in the method 300 in FIG. 3, the method 400 in FIG. 4, the method 500 in FIG. 5, or the method 600 in FIG. 6. In addition, the units in the apparatus 700 and the foregoing other operations and/or functions are separately for implementing the corresponding procedure in the method 300 in FIG. 3, the method 400 in FIG. 4, the method 500 in FIG. 5, or the method 600 in FIG. 6. It should be understood that a specific process in which the units perform the foregoing corresponding steps has been described in detail in the foregoing method embodiments. For brevity, details are not described herein again.

In another possible design, the apparatus 700 may be the control device in the foregoing method embodiments, or may be a chip configured to implement a function of the control device in the foregoing method embodiments.

It should be understood that the apparatus 700 may correspond to the control device in the method 300, the method 400, the method 500, or the method 600 according to embodiments of this application. The apparatus 700 may include a unit configured to perform the method performed by the control device in the method 300 in FIG. 3, the method 400 in FIG. 4, the method 500 in FIG. 5, or the method 600 in FIG. 6. In addition, the units in the apparatus 700 and the foregoing other operations and/or functions are separately for implementing the corresponding procedure in the method 300 in FIG. 3, the method 400 in FIG. 4, the method 500 in FIG. 5, or the method 600 in FIG. 6. It should be understood that a specific process in which the units perform the foregoing corresponding steps has been described in detail in the foregoing method embodiments. For brevity, details are not described herein again.

It should be further understood that the transceiver unit 710 in the apparatus 700 may correspond to a transceiver 820 in an apparatus 800 shown in FIG. 8, and the processing unit 720 in the apparatus 700 may correspond to a processor 810 in the apparatus 800 shown in FIG. 8.

It should be further understood that, when the apparatus 700 is the chip, the chip includes the transceiver unit and the processing unit. The transceiver unit may be an input/output circuit or a communication interface. The processing unit may be a processor, a microprocessor, or an integrated circuit that is integrated on the chip.

The transceiver unit 710 is configured to implement a signal receiving and sending operation of the apparatus 700, and the processing unit 720 is configured to implement a signal processing operation of the apparatus 700.

Optionally, the apparatus 700 further includes a storage unit 730, and the storage unit 730 is configured to store instructions.

FIG. 8 is a schematic block diagram of an apparatus 800 according to an embodiment of this application. As shown in FIG. 8, the apparatus 800 includes at least one processor 810 and a transceiver 820. The processor 810 is coupled to a memory, and is configured to execute instructions stored in the memory, to control the transceiver 820 to send a signal and/or receive a signal. Optionally, the apparatus 800 further includes the memory 830, configured to store the instructions.

It should be understood that the processor 810 and the memory 830 may be integrated into one processing apparatus. The processor 810 is configured to execute program code stored in the memory 830, to implement the foregoing functions. During specific implementation, the memory 830 may alternatively be integrated into the processor 810, or may be independent of the processor 810.

It should be further understood that the transceiver 820 may include a receiver and a transmitter. The transceiver 820 may further include an antenna. There may be one or more antennas. The transceiver 820 may be a communication interface or an interface circuit.

When the apparatus 800 is a chip, the chip includes a transceiver unit and a processing unit. The transceiver unit may be an input/output circuit or a communication interface. The processing unit may be a processor, a microprocessor, or an integrated circuit that is integrated on the chip.

FIG. 9 is a schematic diagram of a chip system according to an embodiment of this application. The chip system herein may alternatively be a system including a circuit. The chip system 900 shown in FIG. 9 includes a logic circuit 910 and an input/output interface (input/output interface) 920. The logic circuit is configured to be coupled to the input interface, and communicate data (for example, first indication information) through the input/output interface, to perform the method in FIG. 3, FIG. 4, FIG. 5, or FIG. 6.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods can be completed by using an integrated logic circuit of hardware in the processor, or by using instructions in a form of software. The steps of the methods disclosed with reference to embodiments of this application may be directly performed and completed by a hardware processor, or may be performed and completed by using a combination of the hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing methods in combination with the hardware in the processor. To avoid repetition, details are not described herein again.

It should be noted that the processor in embodiments of this application may be an integrated circuit chip, and has a signal processing capability. In an implementation process, the steps in the foregoing method embodiments can be completed by using the integrated logic circuit of the hardware in the processor, or by using the instructions in the form of the software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache.

According to the methods provided in embodiments of this application, this application further provides a computer program product. The computer program product includes computer program code. When the computer program code is run on a computer, the computer is enabled to perform the method in any one of the embodiments shown in FIG. 3, FIG. 4, FIG. 5, or FIG. 6.

According to the methods provided in embodiments of this application, this application further provides a computer-readable medium. The computer-readable medium stores program code. When the program code is run on a computer, the computer is enabled to perform the method in any one of the embodiments shown in FIG. 3, FIG. 4, FIG. 5, or FIG. 6.

According to the methods provided in embodiments of this application, this application further provides a system, including the foregoing radio frequency device, the foregoing extension device, and the foregoing control device.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer instructions may be stored in a computer-readable storage medium, or communicated from one computer-readable storage medium to another computer-readable storage medium. The computer-readable storage medium may be any usable medium accessible to a computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed systems, apparatuses, and methods may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A downlink transmission method, comprising:
receiving, by an extension device, indication information from a control device, wherein the indication information indicates a radio frequency device configured to communicate target downlink data, and the radio frequency device configured to communicate the target downlink data is a serving radio frequency device of at least one terminal device configured to receive the target downlink data;
receiving, by the extension device, the target downlink data from the control device; and
sending, by the extension device based on the indication information, the target downlink data to the radio frequency device configured to communicate the target downlink data.

2. The method according to claim 1, wherein the indication information indicates the radio frequency device configured to communicate the target downlink data in a target time unit.

3. The method according to claim 1 or 2, wherein the indication information indicates at least one radio frequency device configured to communicate downlink data in a plurality of time units, the plurality of time units comprise the target time unit for communicating the target downlink data, and the at least one radio frequency device is a serving radio frequency device of at least one terminal device configured to receive the downlink data in the plurality of time units.

4. A downlink transmission method, comprising:
receiving, by an extension device, indication information from a control device, wherein the indication information indicates a radio frequency device configured to communicate target downlink data, and the radio frequency device configured to communicate the target downlink data is a serving radio frequency device of at least one terminal device configured to receive the target downlink data;
sending, by the extension device, a first instruction to the radio frequency device configured to communicate the target downlink data, and/or sending a second instruction to a radio frequency device not configured to communicate the target downlink data, wherein the first instruction instructs to send the target downlink data, and the second instruction instructs not to send the target downlink data;
receiving, by the extension device, the target downlink data from the control device; and
sending, by the extension device, the target downlink data to the radio frequency device configured to communicate the target downlink data and the radio frequency device not configured to communicate the target downlink data.

5. The method according to claim 4, wherein the indication information indicates the radio frequency device that communicates the target downlink data in a target time unit.

6. The method according to claim 4 or 5, wherein the first instruction instructs to send the target downlink data communicated in the target time unit, and the second instruction instructs not to send the target downlink data communicated in the target time unit.

7. The method according to any one of claims 4 to 6, wherein the indication information indicates at least one radio frequency device configured to communicate downlink data in a plurality of time units, the plurality of time units comprise the target time unit for communicating the target downlink data, and the at least one radio frequency device is a serving radio frequency device of at least one terminal device configured to receive the downlink data in the plurality of time units; and the method further comprises:
determining, by the extension device based on the indication information, the radio frequency device configured to communicate the target downlink data and/or the radio frequency device not configured to communicate the target downlink data.

8. The method according to any one of claims 4 to 6, wherein the indication information indicates at least one radio frequency device configured to communicate downlink data in a plurality of time units, the plurality of time units comprise the target time unit for communicating the target downlink data, and the at least one radio frequency device is a serving radio frequency device of at least one terminal device configured to receive the downlink data in the plurality of time units; and the sending, by the extension device, a first instruction to the radio frequency device configured to communicate the target downlink data, and/or sending a second instruction to a radio frequency device not configured to communicate the target downlink data comprises:
sending, by the extension device, an instruction to a connected radio frequency device, wherein the instruction instructs whether to send the downlink data communicated in the plurality of time units.

9. A downlink transmission method, comprising:
receiving, by a radio frequency device, an instruction from an extension device, wherein the instruction instructs whether to send target downlink data;
receiving, by the radio frequency device, the target downlink data from the extension device; and
determining, by the radio frequency device according to the instruction, whether to send the target downlink data.

10. The method according to claim 9, wherein the instruction instructs to send the target downlink data communicated in a target time unit.

11. The method according to claim 9 or 10, wherein the instruction instructs whether to send downlink data communicated in a plurality of time units, and the plurality of time units comprise the target time unit for communicating the target downlink data.

12. A downlink transmission method, comprising:
determining, by a control device, a serving radio frequency device of at least one terminal device configured to receive target downlink data; and
sending, by the control device, indication information to an extension device, wherein the indication information indicates a radio frequency device configured to communicate the target downlink data, and the radio frequency device configured to communicate the target downlink data is the serving radio frequency device of the at least one terminal device configured to receive the target downlink data.

13. The method according to claim 12, wherein the indication information indicates the radio frequency device configured to communicate the target downlink data in a target time unit.

14. The method according to claim 12, wherein the determining, by a control device, a serving radio frequency device of at least one terminal device configured to receive target downlink data comprises:
determining, by the control device, a serving radio frequency device of at least one terminal device configured to receive downlink data communicated in a plurality of time units, wherein the plurality of time units comprise a target time unit for communicating the target downlink data, wherein
the indication information indicates at least one radio frequency device configured to communicate the downlink data in the plurality of time units, and the at least one radio frequency device is the serving radio frequency device of the at least one terminal device configured to receive the downlink data in the plurality of time units.

15. The method according to any one of claims 12 to 14, wherein the method further comprises:
determining, by the control device based on a power of an uplink signal received by each radio frequency device from the terminal device configured to receive the target downlink data, the serving radio frequency device of the terminal device configured to receive the target downlink data.

16. The method according to any one of claims 12 to 14, wherein the method further comprises:
determining, by the control device based on a beam identifier reported by the terminal device configured to receive the target downlink data, the serving radio frequency device of the terminal device configured to receive the target downlink data.

17. An apparatus, configured to implement the method according to any one of claims 1 to 3, or configured to implement the method according to any one of claims 4 to 8.

18. An apparatus, configured to implement the method according to any one of claims 9 to 11.

19. An apparatus, configured to implement the method according to any one of claims 12 to 16.

20. An apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 3, or to enable the apparatus to perform the method according to any one of claims 4 to 8.

21. An apparatus, comprising at least one processor, wherein the at least one processor is coupled to at least one memory, and the at least one processor is configured to execute a computer program or instructions stored in the at least one memory, to enable the apparatus to perform the method according to any one of claims 9 to 11.

22. An apparatus, comprising at least one processor, wherein the at least one processor is coupled to at least one memory, and the at least one processor is configured to execute a computer program or instructions stored in the at least one memory, to enable the apparatus to perform the method according to any one of claims 12 to 16.

23. A system, comprising the apparatuses according to claims 17 to 19, or comprising the apparatuses according to claims 20 to 22.

24. A computer-readable storage medium, wherein the computer-readable storage medium stores a computer program; and when the computer program is executed, the method according to any one of claims 1 to 16 is enabled to be performed.

25. A computer program product, wherein the computer program product comprises a computer program or instructions; and when the computer program or the instructions are run on a processor, the processor is enabled to perform the method according to any one of claims 1 to 16.
